# EUROPÄISCHE PATENTSCHRIFT

(11) **EP 2 994 508 B1**
(45) Veröffentlichungstag und Bekanntmachung des Hinweises auf die Patenterteilung: **04.01.2017**
(21) Anmeldenummer: 14721387.0
(22) Anmeldetag: 05.05.2014
(51) Int. Cl.: C09C 1/40, C09C 1/46, C09C 1/62, C09C 3/10, C09C 1/02, C09C 1/04, C09C 1/28, C09C 1/30, C08K 9/08, C08K 7/14, C08L 77/02, C08L 77/06

(54) **FÜLLSTOFFE MIT OBERFLÄCHENBESCHICHTUNG AUS WASSERLÖSLICHEN POLYAMIDEN**
FILLERS WITH A SURFACE COATING OF WATER-SOLUBLE POLYAMIDES
MATÉRIAUX DE REMPLISSAGE AVEC REVÊTEMENT DE SURFACE EN POLYAMIDES HYDROSOLUBLES

(30) Priorität: 08.05.2013 EP 13167015
(43) Veröffentlichungstag der Anmeldung: 16.03.2016
(73) Patentinhaber: EMS-Patent AG, 7013 Domat/Ems (CH)
(72) Erfinder: STÖPPELMANN, Georg, CH-7402 Bonaduz (CH); HOFFMANN, Botho, CH-7013 Domat/Ems (CH); LAMBERTS, Nikolai, CH-7402 Bonaduz (CH)
(74) Vertreter: OK pat AG
(86) Internationale Anmeldenummer: PCT/EP2014/059096
(87) Internationale Veröffentlichungsnummer: WO 2014/180779

(56) Entgegenhaltungen:
- EP-A1- 0 875 538
- EP-A1- 2 196 494
- US-A1- 2012 178 860

## Beschreibung

Die vorliegende Erfindung betrifft Füllstoffe, die eine Oberflächenbeschichtung aufweisen, welche mindestens ein wasserlösliches Polyamid umfasst, die Verwendung solcher Füllstoffe zur Herstellung von gefüllten und/oder verstärkten thermoplastischen Kunststoff-Formmassen, sowie thermoplastische Kunststoff-Formmassen die derart beschichtete Füllstoffe enthalten.

Füllstoffe können organisch (natürlich oder synthetisch) oder anorganisch (natürlich oder synthetisch) sein und verschiedene geometrische Formen und Grössen aufweisen. Partikelgrösse, Partikelform und Partikelstruktur, aber auch die physikalischen und chemischen Eigenschaften des Füllstoff-Materials, haben als Zusatzstoff einen Einfluss auf die Eigenschaften des Endwerkstoffs, d.h. der durch Mischen bzw. Compoundieren gefüllten Formmasse. Füllstoffe können pulverig, körnig (diese zwei Formen kann man teilchenförmig nennen) oder auch faserförmig sein. Faserförmige Füllstoffe dienen oft der Verstärkung, weshalb man in diesem Fall auch von verstärkten Formmassen spricht. Für die Optimierung der mechanischen Eigenschaften müssen die Füllstoffe mit der Matrix der Formmasse gut verträglich sein, d.h. eine gute Affinität aufweisen, damit sie sich gut dispergieren lassen und die Bindung zwischen Füllstoff und Matrix belastbar ist. Um optimale Resultate zu erzielen, werden die Oberflächen von Füllstoffen oft vorbehandelt.

Auf faserförmige Füllstoffe, und zwar auf natürliche Fasern wie auch auf technische Fasern (Karbonfasern, Kunststofffasern, Glasfasern), wird vor der Weiterverarbeitung eine sogenannte Schlichte aufgebracht, um die Fasern oder Fäden geschmeidiger und widerstandsfähiger gegen mechanische Belastung zu machen. Ohne diese oberflächliche Beschichtung mit einer geeigneten Imprägnierflüssigkeit (Schlichte) können die Fasern durch gegenseitige Reibung beschädigt werden oder sogar brechen. Je nach Anwendungszweck kann diese Imprägnierflüssigkeit (Schlichte) stark unterschiedliche Rezepturen beinhalten. Die Zusammensetzung muss insbesondere auch dem Aspekt einer guten Haftung zur Formmasse bzw. zu einer KunststoffMatrix Rechnung tragen, damit die Festigkeit des Verbundwerkstoffs tatsächlich verbessert wird.

Die Schlichten für Glasfasern bestehen vorwiegend aus einem oder mehreren polymeren Filmbildnern, einem Gleitmittel, einem Netzmittel und sowie mindestens einem Haftvermittler.

US 5,804,313 beschreibt eine beschichtete Glasfaser, wobei als Schlichte eine Mischung aus einem wasserlöslichen Polyamid (enthaltend Oligo-Ethylenglykol-Diamin), Acrylpolymer, Haftvermittler und Fasergleitmittel verwendet wird. Die wässrige Schlichte enthält keine Urethan-Polymere und besteht hinsichtlich des Feststoffgehaltes zum grösseren Teil aus neutralisierter Polyacrylsäure. Die so beschichteten Glasfasern sind kostengünstig herstellbar, führen aber in den verstärkten Polymerzusammensetzungen zu schlechteren mechanischen Eigenschaften verglichen mit Polyurethanschlichten, wie Tabelle 2 von US 5,804,313 zeigt.

US 2012/0178860 A1 betrifft verstärkte Polycarbonat-Zusammensetzungen enthaltend Fasern oder anorganische Füllstoffe, welche mit einem wasserlöslichen Polyamid beschichtet sind. Zwei Arten von wasserlöslichen Polyamiden werden genannt: Polyamide enthaltend tertiäre Aminogruppen und Polyamide enthaltend Polyalkylenglykol-Einheiten. Spezifisch offenbart werden lediglich wasserlösliche Polyamide (Handelsprodukte) auf Basis von PA6- oder PA66- und Polyethylenoxid-Einheiten. Der Gehalt an Füllstoffen, der mit wasserlöslichen Polyamiden behandelt wurde, ist mit 6 bis 22 Gew.-Teilen bezogen auf 100 Gew.-Teile Polymer-Matrix relativ niedrig.

EP 1 445 370 B1 beansprucht eine Karbonfaser-Schlichte, die unter anderem wasserlösliche thermoplastische Harze, insbesondere wasserlösliche Polyamide enthält, sowie zwingend ein Tensid. In den Beispielen gearbeitet werden wasserlösliche Polyamide auf Basis von PA6- oder PA66- und Polyethylenoxid-Einheiten, wobei die Konzentration der Polyethylenoxid-Einheiten niedrig ist.

JP 09-003777 A beschreibt ebenfalls eine wässrige Schlichte für Karbonfasern, welche neben wasserlöslichen Polyamiden noch zwingend ein Netzmittel enthält. Das wasserlösliche Polyamid beruht dabei auf einem Copolymer aus PA6- oder PA66-Einheiten und Polyethylenoxid-Einheiten, wobei die Polyoxyethylen-Konzentration dieser Polyamide nochmals niedriger ist als diejenige im zuvor genannten Dokument EP 1 445 370 B1.

EP 2 196 494 A1 beschreibt eine Polyamid-Schichtsilikat-Zusammensetzung, bei welcher ein unbehandeltes Tonmineral in Wasser dispergiert und ein wasserlöslichen Polyamid in Wasser gelöst und die beiden Lösungen vermischt werden. Das resultierende und getrocknete Produkt ist ein mit dem wasserlöslichen Polyamid interkaliertes Schichtsilikat, bei welchem zu vermuten ist, dass bei diesem Vorgehen auch die Oberfläche der Schichtsilikat-Teilchen mit dem wasserlöslichen Polyamid beschichtet wird.

EP 0 875 538 A1 offenbart einen Füllstoff bestehend aus, mit einem Polyamid beschichteter, poröser Kieselsäure.

Die Aufgabe der vorliegenden Erfindung bestand darin, Füllstoffe, ausgenommen Schichtsilikate, mit einer Oberflächenbeschichtung zur Verfügung zu stellen, die ein alternatives wasserlösliches Polyamid umfasst, und deren Verwendung bei der Herstellung von gefüllten und/oder verstärkten Formmassen thermoplastische Kunststoff-Formmassen mit guten mechanischen Eigenschaften und geringer Ausgasung (wenig Emissionen) ergibt. Die Oberflächenbeschichtung soll eine hohe thermische Beständigkeit aufweisen, und in dieser Hinsicht eine Verbesserung gegenüber bekannten Beschichtungen auf Polyurethanbasis bieten.

Diese Aufgabe wird gemäss der vorliegenden Erfindung mit den oberflächenbeschichteten Füllstoffen mit den Merkmalen von Anspruch 1 gelöst. Bevorzugte Ausführungsformen dieser Füllstoffe ergeben sich aus den abhängigen Ansprüchen. Zudem werden Verwendungen (d.h. Verfahren) betreffend die Herstellung der Oberflächenbeschichtung und die Herstellung von gefüllten und/oder verstärkten thermoplastischen Kunststoff-Formmassen beansprucht, sowie thermoplastische Kunststoff-Formmassen welche Füllstoffe mit einer solchen Oberflächenbeschichtung enthalten.

Erfindungsgemässe Füllstoffe, ausgenommen Schichtsilikate, weisen eine Oberflächenbeschichtung auf, die ein wasserlösliches Polyamid oder mehrere wasserlösliche Polyamide umfasst, wobei zumindest eines dieser wasserlöslichen Polyamide durch Polykondensation aus folgenden Monomerkomponenten hergestellt ist:
(a) mindestens einer linear-aliphatischen, verzweigt-aliphatischen, cyclo-aliphatischen und/oder aromatischen Dicarbonsäure mit 6 bis 36 C-Atomen, bevorzugt mit 6 bis 18 C-Atomen, besonders bevorzugt mit 6 bis 12 C-Atomen; und
(b1) 25-100 Mol-% bezogen auf die Summe der Molmengen der Monomerkomponenten (b1)+(b2)+(b3) mindestens eines Diamins ausgewählt aus der Gruppe bestehend aus 4-Oxaheptan-1,7-diamin, 4,7-Dioxadecan-1,10-diamin, 4,7-Dioxa-5-methyl-decan-1,10-diamin, 6-oxa-undecan-1,11-diamin, 4,8-Dioxa-undecan-1,11-diamin, 4,8-Dioxa-5-methyl-undecan-1,11-diamin, 4,8-Dioxa-5,6-dimethyl-undecan-1,11-diamin, 4,9-Dioxa-dodecan-1,12-diamin, 4,7,10-Trioxa-tridecan-1,13-diamin, 4,7,10-Trioxa-5,8-dimethyl-tridecan-1,13-diamin, 4,11-Dioxa-tetradecan-1,14-diamin, 4,7,11-Trioxa-tetradecan-1,14-diamin, 4,7,10,13-Tetraoxa-hexadecan-1,16-diamin, 4,7,10,13,16-Pentaoxa-nonadecan-1,19-diamin und 4,17-Dioxa-eicosane-1,20-diamin; und
(b2) 0-50 Mol-% bezogen auf die Summe der Molmengen der Monomerkomponenten (b1)+(b2)+(b3) mindestens eines linear-aliphatischen, verzweigt-aliphatischen, cyclo-aliphatischen und/oder aromatischen Diamins mit 2 bis 36, bevorzugt 4 bis 18, besonders bevorzugt 6 bis 15 C-Atomen; und
(b3) 0-50 Mol-% bezogen auf die Summe der Molmengen der Monomerkomponenten (b1)+(b2)+(b3) mindestens einer Verbindung aus der Gruppe bestehend aus Oligooxyethylendiaminen, Polyoxyalkylendiaminen und Polyalkylenglykolen; und
(c) 0-45 Mol-% mindestens eines Lactams und/oder mindestens einer Aminocarbonsäure;
wobei die Molmenge der Monomerkomponente (a) im Verhältnis zur Summe der Molmengen der Monomerkomponenten (b1)+(b2)+(b3) ein Molverhältnis im Bereich von 0.8 bis 1.2 aufweist, und
wobei sich der Anteil der Monomerkomponente (c) auf die molare Summe von allen das zumindest eine wasserlösliche Polyamid bildenden Monomerkomponenten (a)+(b1)+(b2)+(b3)+(c) bezieht.

Die Diamine der Gruppe (b1) sind ausgewählt aus Ether-Diaminen, die keine Oxyethyl-Amino-Endgruppen, sondern vorzugsweise lineare Oxypropyl-Amino-Endgruppen umfassen. Bevorzugt machen diese Ether-Diamine (b1) wenigstens 50 Mol-%, besonders bevorzugt wenigstens 70 Mol-% und ganz besonders bevorzugt wenigstens 90 Mol-% bezogen auf die Summe der Molmengen der Monomerkomponenten (b1)+(b2)+(b3) aus. Insbesondere wird bevorzugt, wenn die Diaminkomponente ausschliesslich aus der Komponente (b1) gebildet wird, d.h. wenn (b1) = 100 Mol-% und sowohl (b2) als auch (b3) = Null sind.

Bei bevorzugten Füllstoffen sind für zumindest eines der wasserlöslichen Polyamide der Oberflächenbeschichtung als Monomerkomponente (a) Adipinsäure und/oder Sebazinsäure, als Monomerkomponente (b1) 4,7,10-Trioxa-tridecan-1,13-diamin und/oder 4,7,10,13-Tetraoxa-hexadecan-1,16-diamin, und gegebenenfalls als Monomerkomponente (b2) Hexandiamin ausgewählt. Besonders bevorzugt sind wasserlösliche Polyamide enthaltend Adipinsäure und 4,7,10-Trioxa-tridecan-1,13-diamin. Ein bevorzugtes wasserlösliches Polyamid besteht z.B. aus (a) 60-100 Mol-% Adipinsäure und 0-40 Mol-% Sebazinsäure (bezogen auf total 100 Mol-% Dicarbonsäuren) sowie aus (b1) 60-100 Mol-% Trioxatridecandiamin und/oder Tetraoxahexadecandiamin und (b2) 0-40 mol-% Hexandiamin (bezogen auf total 100 Mol-% (b1)+(b2)+(b3), mit (b3)=0).

Bevorzugt liegt das Molverhältnis der Molmenge der Monomerkomponente (a) im Verhältnis zur Summe der Molmengen der Monomerkomponenten (b1)+(b2)+(b3) im Bereich von 0.85 bis 1.15, besonders bevorzugt im Bereich von 0.9 bis 1.1.

Bevorzugt besteht die Oberflächenbeschichtung von erfindungsgemässen Füllstoffen zu mindestens 50 Gew.-%, bevorzugt zu mindestens 70 Gew.-%, besonders bevorzugt zu mindestens 90 Gew.-%, und ganz besonders bevorzugt ausschliesslich aus mindestens einem anspruchsgemässen wasserlöslichen Polyamid. Weiterhin umfasst die Oberflächenbeschichtung in einer bevorzugten Ausführungsform zusätzlich zu dem mindestens einen wasserlöslichen Polyamid mindestens einen Haftvermittler, insbesondere auf Basis von Silanen, Siloxanen oder Aminosilanen. Die Konzentration des mindestens einen Haftvermittlers (d.h. die Summe von allen vorhandenen, einem oder mehreren Haftvermittlern) beträgt bevorzugt 10 bis 50 Gew.-% und besonders bevorzugt 15 bis 40 Gew.-%, bezogen auf die als Trockenmasse berechnete Gesamtmasse der Oberflächenbeschichtung (Summe aller Komponenten der Beschichtungslösung ausser Wasser und leichtsiedenden Lösungsmitteln, wobei hier unter letzteren solche mit einem niedrigeren Siedepunkt als dem von Wasser verstanden werden).

Bevorzugte Haftvermittler sind Silane und Siloxane, die niedermolekular oder oligomer vorliegen können und bevorzugt Aklyl-, Alkoxy-, Phenyl-, Vinyl-, Fluoralkyl-, Epoxy-, Glycidyl-, primäre, sekundäre, tertiäre und quartäre Amin-Gruppen enthalten. Besonders bevorzugt sind Haftvermittler, die hydrolysierbare Alkoxysilylgruppen und/oder reaktive Aminogruppen enthalten, wobei bezüglich der Aminogruppen primäre und sekundäre Aminogruppen bevorzugt werden. Bevorzugte Haftvermittler sind Alkylalkoxysilanverbindungen, Aminoalkoxysilanverbindungen und Bis-Aminoalkoxysilanverbindungen. Dabei haben die bevorzugten Alkylgruppen dieser Verbindungen 1 bis 24 Kohlenstoffatome, wobei Methyl-, Ethyl-, Propyl-, Butyl-, Isobutyl-, Pentyl-, Hexyl-, Heptyl- oder Octylgruppen besonders bevorzugt sind. Bevorzugte Alkoxygruppen haben 1 bis 8 Kohlenstoffatome, wobei Methoxy-, Ethoxy- und Propoxygruppen besonders bevorzugt sind.

Bevorzugt verwendbare Haftvermittler sind: Aminopropyltrimethoxysilan, 3-Aminopropyltriethoxysilan (AMEO), Diaminoethylen-3-propyltrimethoxysilan (DAMO), Triaminodiethylen-3-propyltrimethoxysilan (TRIAMO), Aminopropylmethyldiethoxysilan, Aminopropylmethyldimethoxysilan, 2-Aminoethyltrimethoxysilan, 2-Aminoethyl-methyl-dimethoxysilan, 2-Aminoethyl-phenyldimethoxysilan, 2-Aminoethyl-triethoxysilan, 2-Aminoethyl-methyl-diethoxysilan, 2-Aminoethyl-triethoxysilan, 2-(2-Aminoethylamino)-ethyl-triethoxysilan, 6-Aminon-hexyl-triethoxysilan, 6-Amino-n-hexyl-trimethoxysilan, 6-Amino-n-hexyl-methyl-dimethoxysilan sowie insbesondere 3-Amino-n-propyl-trimethoxysilan, 3-Amino-n-propyl-methyl-dimethoxysilan, 3-Amino-n-propyl-triethoxysilan, 3-Amino-n-propyl-methyl-diethoxysilan, 1-Aminomethyltriethoxysilan, 1-Aminomethylmethyldiethoxysilan, 1-Aminomethyltrimethoxysilan, 1-Aminomethylmethyldiethoxysilan, N-Butyl-3-aminopropyltriethoxysilan, N-Butyl-3-aminopropylmethyldiethoxysilan, N-Butyl-3-aminopropyltrimethoxysilan, N-Butyl-3-aminopropylmethyldimethoxysilan, N-Butyl-1-amino-methyltriethoxysilan, N-Butyl-1-aminomethylmethyldimethoxysilan, N-Butyl-1-aminomethyltrimethoxysilan, N-Butyl-1-aminomethylmethyltriethoxysilan, N-Cyclohexyl-1-aminomethylmethyltriethoxysilan, N-Cyclohexyl-1-aminomethylmethyltrimethoxysilan, N-Phenyl-1-aminomethylmethyltriethoxysilan, N-Phenyl-1-aminomethylmethyltrimethoxysilan, N-Formyl-3-aminopropyltriethoxysilan, N-Formyl-3-aminopropyltrimethoxysilan, N-Formyl-1-aminomethylmethyldimethoxysilan, Bis(triethoxysilylpropyl)amin, Tris(triethoxysilylpropyl)amin, Tris(trimethoxysilylpropyl)amin, 3-Glycidoxypropyltrialkoxysilan, als Triethoxy- oder Trimethoxysilan; Epoxycyclohexyltrialkoxysilan, als Triethoxy- oder Trimethoxysilan, Propyltrimethoxysilan (PTMO), Dimethyldimethoxysilan (DMDMO), Dimethyldiethoxysilan, Methyltriethoxysilan (MIES), Propylmethyldimethoxysilan, Propyl-methyl-diethoxysilan, n-Octyl-methyl-dimethoxysilan, n-Hexyl-methyl-dimethoxysilan, n-Hexyl-methyl-diethoxysilan, Propyltriethoxysilan, Isobutyltrimethoxysilan, Isobutyltriethoxysilan, Octyltrimethoxysilan, Octyltriethoxysilan, n-Hexyl-triethoxysilan, Cyclohexyl-triethoxysilan, n-Propyl-tri-n-butoxysilan, n-Propyl-trimethoxysilan, n-Propyl-triethoxysilan, Isobutyl-triethoxysilan, Hexadecyltriethoxysilan, Hexadecyltrimethoxysilan, Octadecyltriethoxysilan, Octadecyltrimethoxysilan, Octadecylmethyl-diethoxysilan, Octadecylmethyldimethoxysilan, Hexadecylmethyldimethoxysilan, Hexadecylmethyldiethoxysilan und/oder N-Formyl-1-aminomethylmethyldiethoxy-silan, Tetraethylorthosilicat, Vinyl-tris(2-methoxyethoxy)silan, 3-Amino-propyl-triethoxysilan, Tetramethoxysilane, y-Methacryloxytrimethoxysilan, γ-Aminopropyl-triethoxysilan, N-β-(aminoethyl)-γ-(aminopropyl)-triethoxysilan, N-Vinylbenzyl-N'-aminoethyl-3-aminopropylpolysiloxan-Hydrochlorid oder N-β-(Aminoethyl)-y-(aminopropyl)-trimethoxysilan oder deren Gemische. Besonders bevorzugte Haftvermittler sind Methoxy-, Ethoxy- oder Propoxysilane mit primären und/oder sekundären Aminogruppen.

Gegebenenfalls kann die Oberflächenbeschichtung der Füllstoffe oder die zur Oberflächenbeschichtung eingesetzte, bevorzugt wässrige Beschichtungslösung (z.B. ein Tauchbad) weitere Bestandteile (Stoffe) umfassen, wie z.B. weitere Filmbildner verschieden vom wasserlöslichen Polyamid, Antistatika, Gleitmittel, Lösungsmittel, oberflächenaktive Substanzen, Haftvermittler und Hilfsmittel. Diese Bestandteile können bis zu 50 Gew.-%, bevorzugt bis zu 40 Gew.-%, insbesondere 10-40 Gew.-%, bezogen auf die als Trockenmasse berechnete Gesamtmasse der Oberflächenbeschichtung (Summe aller Komponenten der Beschichtungslösung ausser Wasser und leichtsiedenden Lösungsmitteln) ausmachen.

Bevorzugt enthält die Oberflächenbeschichtung jedoch kein Netzmittel, keine Antistatika, keinen Emulgator und keinen Stabilisator. Besonders bevorzugt enthält die Oberflächenbeschichtung kein Netzmittel. Weiterhin enthält die Oberflächenbeschichtung neben den erfindungsgemässen wasserlöslichen Polyamiden bevorzugt keine weiteren polymeren Filmbildner, insbesondere keine weiteren wasserlöslichen polymeren Filmbildner oder Filmbildner auf Polyurethanbasis.

Als "wasserlösliche" wird erfindungsgemäß ein Polyamid bezeichnet, das in reinem Wasser löslich ist, und in gelöstem Zustand auf molekularer Ebene solvatisiert in Wasser vorliegt. Insbesondere liegt Wasserlöslichkeit dann vor, wenn mindestens 10 g, bevorzugt mindestens 50 g und besonders bevorzugt mindestens 100 g Polyamid in 1000 g Wasser bei 23 °C vollständig, d.h. ohne Bodensatz, löslich sind. Da der wasserlösliche Polyamid-Filmbildner während der Applizierung auf die Füllstoffe molekular gelöst in Wasser oder einem Wasser enthaltenden Medium vorliegt, braucht es keine stabilisierende Zusätze, wie sie beispielsweise für Polyurethan-Dispersionen erforderlich sind. Darüber hinaus sind die erfindungsgemässen Beschichtungsbäder im Vergleich zu Bädern, die Polymerdispersionen enthalten, über deutlich längere Zeiträume stabil.

Beim anspruchsgemässen wasserlöslichen Polyamid handelt es sich insbesondere um ein kaltwasserlösliches Polyamid mit einer relativen Lösungsviskosität (RV oder ηᵣₑₗ) im Bereich von 1.3 bis 3.0, bevorzugt im Bereich von 1.4 bis 2.0, insbesondere im Bereich von 1.5 bis 1.9 (Messmethode vgl. weiter hinten). Als wasserlösliches Polyamid werden bevorzugt Polyetheramide, insbesondere mit statistischem Aufbau, verwendet. Bei den zwischen den Amidbindungen liegenden Ethergruppen handelt es sich bevorzugt um Oxyethylen- und Oxypropylen-Einheiten.

Zum Begriff "Polyamid" soll an dieser Stelle angemerkt werden, dass "Polyamid" ein Oberbegriff ist, unter welchen Homopolyamide, Copolyamide, Polyetheramide, Polyetheresteramide, sowie Mischungen (Blends) von verschiedenen Polyamiden fallen. Das anspruchsgemässe wasserlösliche Polyamid ist genauer gesagt ein wasserlösliches Polyetheramid (was bevorzugt ist), oder ein Polyetheresteramid im Falle dass als Monomerkomponente (b3) ein Polyalkylenglykol vorkommt.

Betreffend die optionale Monomerkomponente (b3) sind mit Oligooxyethylendiaminen kurzkettige Ethylenglykoldiamine gemeint, insbesondere Diethylenglykoldiamin, Triethylenglykoldiamin und Tetraethylenglykoldiamin. Polyoxyalkylendiamine sind Polyalkylenglykoldiamine mit einer zahlenmittleren Molmasse im Bereich von 400 bis 2000 g/mol, bevorzugt im Bereich von 500 bis 1500 g/mol und besonders bevorzugt im Bereich von 500 - 1200 g/mol, insbesondere Polyethylenglykoldiamine, Polypropylenglykoldiamine, Polytetramethylendiamine sowie Polyetherdiamine auf Basis mindestens zweier Monomere ausgewählt aus der Gruppe bestehend aus Ethylenoxid, Propylenoxid und Tetrahydrofuran, wie z.B. Copolymeren mit Polyoxyethylen- und Polyoxypropylen-Einheiten, wobei die Polyoxyethylen-Einheiten überwiegen. Als Polyalkylenglykol kommen in Frage Polyalkylenglykole mit einer zahlenmittleren Molmasse im Bereich von 200 bis 2000 g/mol, bevorzugt im Bereich von 400 bis 1600 g/mol und besonders bevorzugt im Bereich von 400 - 1000 g/mol, insbesondere Polyethylenglykol, Polypropylenglykol, Polytetrahydrofuran, sowie Copolymere mit Polyoxyethylen-, Polyoxypropylen- und/oder Polyoxytetramethylen-Einheiten, wobei die Polyoxyethylen-Einheiten überwiegen.

Zum Aufbau der anspruchsgemässen wasserlöslichen Polyamide geeignete linear-aliphatische, verzweigt-aliphatische, cyclo-aliphatische und/oder aromatische Diamine der optionalen Monomerkomponente (b2) sind z.B. 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin, p-Xylylendiamin, Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethylcyclo-hexyl)-methan (TMDC), 2,6-Norbornandiamin oder 2,6-Bis-(aminomethyl)-norbornan oder 1,3-Diaminocyclohexan, 1,4-Diaminocyclohexandiamin, Isophorondiamin, 1,3-Bis-(aminomethyl)cyclohexan und 1,4-Bis-(aminomethyl)cyclohexan. Bevorzugt sind linear-aliphatische Diamine mit 6 bis 12 Kohlenstoffatomen, insbesondere 1,6-Hexandiamin. Diese Diamine machen bevorzugt nicht mehr als 40 Mol-% bezogen auf die Summe der Molmengen der Monomerkomponenten (b1)+(b2)+(b3) aus.

Für das anspruchsgemässe wasserlösliche Polyamid geeignete Dicarbonsäuren (a) sind: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyclohexan-1,3-dicarbonsäure (CHDA) und Gemische daraus. Bevorzugt werden aromatische Dicarbonsäuren und linear-aliphatische Dicarbonsäuren. Insbesondere bevorzugt werden die Dicarbonsäuren Adipinsäure, Azelainsäure, Sebazinsäure, Dodecandisäure sowie Terephthalsäure und Isophthalsäure. Besonders bevorzugt wird ein wasserlösliches Polyamid, dessen Anteil an Adipin- und/oder Sebazinsäure wenigstens 50 Mol-%, bezogen auf die Summe aller Dicarbonsäuren von Monomerkomponente (a), beträgt. Insbesondere ist es bevorzugt, wenn der Anteil der Terephthalsäure in Monomerkomponente (a) kleiner als 45 Mol-% ist oder keine Terephthalsäure in Monomerkomponente (a) enthalten ist.

Die anspruchsgemässen wasserlöslichen Polyamide können als weitere Monomerkomponente (c) optional auch Lactame und/oder Aminocarbonsäuren, insbesondere α,ω-Aminosäuren oder Lactame mit 5 bis 12 Kohlenstoffatome enthalten, wobei beispielhaft nachfolgende Auswahl genannt sei: m-Aminobenzoesäure, p-Aminobenzoesäure, Caprolactam (CL), ω-Aminocapronsäure, ω-Aminoheptansäure, ω-Aminoctansäure, ω-Aminononansäure, ω-Aminodecansäure, ω-Aminoundecansäure (AUA), Laurinlactam (LL) und ω-Aminododecansäure (ADA). Besonderes bevorzugt sind Caprolactam, Aminocapronsäure, Laurinlactam, Aminoundecansäure und Aminododecansäure. Der Anteil an Lactamen und/oder Aminosäuren beträgt bevorzugt 2 bis 40 Mol-% und besonders bevorzugt 3 bis 35 Mol-%, bezogen auf die molare Summe von allen das zumindest eine wasserlösliche Polyamid bildenden Monomerkomponenten (a)+(b1)+(b2)+(b3)+(c).

Die Füllstoffe sind ausgewählt aus anorganischen und/oder organischen Stoffen. Bevorzugt sind die Füllstoffe ausgewählt aus faserförmigen und/oder teilchenförmigen Stoffen.

Beim erfindungsgemäss oberflächenbeschichteten Füllstoff beträgt der eigentliche Füllstoff-Anteil vorzugsweise 80-99.8 Gew.-%, d.h. der Anteil der Oberflächenbeschichtung umfassend mindestens ein anspruchsgemässes wasserlösliches Polyamid liegt vorzugsweise im Bereich von 0.2-20 Gew.-%. Insbesondere wird bevorzugt, wenn der Anteil der Oberflächenbeschichtung im Bereich von 0.3 bis 10 Gew.-% liegt.

Füllstoffe im Sinne der vorliegenden Erfindung sind wie gesagt sowohl teilchenförmige Füllstoffe als auch faserförmige Füllstoffe. Unter Füllstoffe fallen auch funktionelle Additive für die Kunststoffherstellung, wie z.B. organische und anorganische Flammschutzmittel, Leitfähigkeitsadditive (zur Erhöhung der thermischen und/oder elektrischen Leitfähigkeit) oder Pigmente, die ebenfalls erfindungsgemäss vorbehandelt d.h. oberflächenbeschichtet werden können.

Bevorzugt sind die Füllstoffe ausgewählt aus der Gruppe bestehend aus Glasfasern, Kohlenstofffasern, Metallfasern, Borfasern, Aramidfasern, organischen Flammschutzmitteln, anorganischen Flammschutzmitteln und Synergisten, thermisch und/oder elektrisch leitfähigen Additiven, und mineralischen Füllstoffen, wobei Schichtsilikate ausgenommen sind.

Gemäss einer bevorzugten Ausführungsform der vorgeschlagenen oberflächenbeschichteten Füllstoffe handelt es sich bei den Füll- und Verstärkungsmitteln um Fasern, insbesondere um Glas- oder Kohlenstofffasern (Karbonfasern, Graphitfasern), Metallfasern, Kaliumtitanatwhisker, Borfasern, Aramid- (p- oder m-Aramidfasern (z.B. Kevlar^{®} oder Nomex^{®}, DuPont)) und Basaltfasern, wobei bevorzugt Kurzfasern, bevorzugt mit einer Länge im Bereich von 2 bis 50 mm und einem Durchmesser von 5 bis 40 µm oder Endlosfasern (Rovings) eingesetzt werden, und wobei insbesondere Fasern mit kreisförmiger oder nicht-kreisförmiger Querschnittsfläche eingesetzt werden, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt. Diese sogenannten flachen Glasfasern weisen eine ovale, elliptische, mit Einschnürung(en) versehene elliptische (sog. "Kokon"- oder"cocoon"-Faser), rechteckige oder nahezu rechteckige Querschnittsfläche auf. Ein weiteres bevorzugtes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm, und die Länge der Nebenquerschnittsachse im Bereich von 3 bis 20 µm, insbesondere im Bereich von 4 bis 10 µm liegt.

Die oben genannten runden Schnittglasfasern (Kurzglasfasern), also geschnittene Glasfasern mit rundem Querschnitt, haben bevorzugtermassen einen Durchmesser im Bereich von 5 bis 17 µm, insbesondere im Bereich von 6 bis 10 µm.

Die erfindungsgemäss als Rovings eingesetzten Glasfasern weisen üblicherweise einen Durchmesser von 5 bis 20 µm, bevorzugt von 8 bis 20 µm, besonders bevorzugt von 9 bis 18 µm und ganz besonders bevorzugt von 10 bis 17 µm auf, wobei der Querschnitt der Glasfasern rund, oval, elliptisch, nahezu rechteckig oder rechteckig sein kann. Besonders bevorzugt sind sogenannte flache Endlos-Glasfasern mit einem Verhältnis der Querschnittsachsen von 2 bis 5.

Insbesondere werden erfindungsgemäss E-Glasfasern verwendet. Die Glasfaser selbst, unabhängig von der Form der Querschnittsfläche und Länge der Faser, kann dabei ausgewählt sein aus der Gruppe aus E-Glasfasern, A-Glasfasern, C-Glasfasern, D-Glasfasern, M-Glasfasern, S-Glasfasern und/oder R-Glasfasern, wobei E-Glasfasern bevorzugt sind.

Die eingesetzten Endlos-Kohlefasern (Kohlenstofffasern) weisen bevorzugt einen Durchmesser von 5 bis 10 µm, besonders bevorzugt von 5 bis 8 µm und ganz besonders bevorzugt von 6 bis 7 µm auf.

Bei den Füll- und Verstärkungsmitteln kann es sich auch um teilchenförmige Füllstoffe handeln. Dabei können als teilchenförmige Fühstoffe erfindungsgemäss vorzugsweise mineralische Füllstoffe (ausgenommen Schichtsilikate) wie ungeschichtete Silikate, Quarz, Titandioxid, Wollastonit, amorphe Kieselsäuren, Magnesiumcarbonat, Magnesiumhydroxid, Kreide, Kalk, Feldspat, Bariumsulfat, Voll- oder Hohl-Glaskugeln oder gemahlenes Glas, oder auch Metalle oder Metallverbindungen oder Legierungen eingesetzt werden.

Schichtsilikate können an sich ebenfalls oberflächenbeschichtet werden, aber sie fallen aufgrund des Disclaimers nicht unter den Schutzbereich dieser Patentanmeldung.

Füllstoffe im Sinne der Erfindung sind insbesondere auch Leitfähigkeitsadditive (thermisch, elektrisch) und Flammschutzmittel.

Flammschutzmittel umfassen sowohl halogenhaltige wie halogenfreie Flammschutzmittel, wobei halogenfreie Flammschutzmittel bevorzugt werden. Besonders bevorzugte Flammschutzmittel sind Phosphonate, Alkylphosphonate, zyklische Phosphonate und Phosphinate, insbesondere geradkettige oder zyklische Phosphonate und Phosphinsäuresalze und/oder Diphosphinsäuresalze, Melaminpolyphosphat, Melem, Melam, Melon, Melamincyanurat, oder Umsetzungsprodukte von Melamin mit Polyphosphorsäure oder um Umsetzungsprodukte von Kondensationsprodukten des Melamins mit Polyphosphorsäure. Als Metallion der Phosphinsäuresalze oder Diphosphinsäuresalze werden bevorzugt Aluminium-, Calcium- und Zink-Ionen verwendet. Derartige Flammschutzmittel, die zu den organischen Füllstoffen gerechnet werden können, sind aus dem Stand der Technik bekannt. Hierzu wird auf die DE 103 46 326 A1 verwiesen. Zu den Flammschutzmitteln gehören auch Synergisten, wie z.B. Bariumcarboxylat, sauerstoff-, stickstoff- oder schwefelhaltigen Metallverbindungen, insbesondere der Metalle Aluminium, Calcium, Magnesium, Barium, Natrium, Kalium und Zink. Geeignete Verbindungen sind ausgewählt aus der Gruppe der Oxide, Hydroxide, Carbonate, Silikate, Borate, Phosphate, Stannate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Bariumcarbonat, Magnesiumhyroxid, Aluminiumhydroxid, Böhmit, Dihydrotalcit, Hydrocalumit, Calciumhydroxid, Zinnoxidhydrat, Zinkhydroxid, Zinkborat, Zinksulfid, Zinkphosphat, Natriumcarbonat, Calciumcarbonat, Calciumphosphat, Magnesiumcarbonat, basisches Zinksilikat, Zinkstannat. Auch möglich sind Systeme wie Calciumstearat, Zinkstearat, Magnesiumstearat, Kaliumpalmitat, Magnesiumbehenat. Als konkrete Beispiele für solche Flammschutzmittel seien genannt: Exolit^{®} OP 1230 (Clariant), Exolit^{®} OP 1312 (Clariant), Melapur^{®} 200/70, Melapur^{®} MC50 und MC25, Melapur^{®} MP (BASF). Besonders bevorzugt als Flammschutzmittel sind Phosphinsäuresalze, Diphosphinsäuresalze und Melaminpolyphosphat.

Erfindungsgemässe Füllstoffe, die die Wärmeleitfähigkeit von Formmassen erhöhen sind z.B.: Quarz, Aluminiumoxid, Magnesiumoxid, Calciumfluorid, Aluminiumnitrid, Siliziumcarbid, Siliziumnitrid, Bornitrid, Borcarbid, Zinksulfid, pulverförmige Metalle, wie z.B. Aluminium, Kupfer oder Silber.

Als Wärmeleitfähigkeitsadditive werden bevorzugt oxidische Füllstoffpartikel auf Basis der folgenden Metalle eingesetzt: Silizium, Zinn, Titan, Zirkon, Calcium, Strontium, Barium, Aluminium, Yttrium, Zink, Tantal, Cer, Gadolinium, Holmium, Erbium, Ytterbium sowie Glas, Glaskeramik und Keramikbildende Materialien und/oder deren Kombinationen. Das Material kann sowohl kristallin, teilkristallin als auch amorph sein.

Bevorzugte wärmeleitende Füllstoffe sind Quarz, Aluminiumoxid und Bornitrid. Grundsätzlich können sowohl splittrige, sphärische, faserförmige als auch plättchenförmige Partikel verwendet werden.

Die Partikelgrösse richtet sich nach dem jeweiligen Anwendungszweck. Beim Einsatz von erfindungsgemäss gefüllten Formmassen in dünnwandigen Formkörpern ist es vorteilhaft, mit der maximalen Partikelgrösse deutlich unter der zu realisierenden Wandstärke zu bleiben; bevorzugt beträgt die maximale Partikelgrösse weniger als die halbe Wandstärke. Die mittlere Partikelgrösse beträgt bevorzugt weniger als 300 µm, bevorzugt weniger als 100 µm, besonders bevorzugt weniger als 50 µm.

Bornitrid wird bevorzugt mit einer Partikelgrösse von etwa 1 bis etwa 50 µm eingesetzt, wobei das Bornitrid ein kubisches Bornitrid, ein hexagonales Bornitrid, ein amorphes Bornitrid, ein rhomboedrisches Bornitrid oder eine Kombination davon ist. Besonders bevorzugt ist das hexagonale Bornitrid.

Als leitfähiger Füllstoff (sowohl thermisch wie elektrisch) kann auch Graphit mit einer Partikelgrösse von etwa 1 bis 200 µm eingesetzt werden. Dabei wird bevorzugt, wenn der Graphit ein kristalliner Vein-Graphit (Crystal Vein Graphite), ein Flockengraphit, ein expandierter Graphit, ein mikrokristalliner oder amorpher Graphit, ein synthetischer Graphit oder eine Kombination davon ist.

Vorteilhaft werden auch Füllstoffmischungen aus Graphit und Bornitrid eingesetzt. Als leitfähiger Füllstoff können weiterhin zweidimensionale grossflächige Kohlenstoff-Makromoleküle wie Graphen eingesetzt werden.

Die Erfindung betrifft auch die Verwendung mindestens eines Füllstoffs zur Herstellung von gefüllten und/oder verstärkten thermoplastischen Kunststoff-Formmassen, wobei sich der Füllstoff von Schichtsilikat unterscheidet und eine Oberflächenbeschichtung aufweist die ein wasserlösliches Polyamid oder mehrere wasserlösliche Polyamide umfasst, wobei zumindest eines dieser wasserlösliche Polyamide durch Polykondensation aus folgenden Monomerkomponenten hergestellt ist:
(a) mindestens einer linear-aliphatischen, verzweigt-aliphatischen, cyclo-aliphatischen und/oder aromatischen Dicarbonsäure mit 6 bis 36 C-Atomen, bevorzugt mit 6 bis 18 C-Atomen, besonders bevorzugt mit 6 bis 12 C-Atomen; und
(b1) 25-100 Mol-% bezogen auf die Summe der Molmengen der Monomerkomponenten (b1)+(b2)+(b3) mindestens eines Diamins ausgewählt aus der Gruppe bestehend aus 4-Oxaheptan-1,7-diamin, 4,7-Dioxadecan-1,10-diamin, 4,7-Dioxa-5-methyl-decan-1,10-diamin, 6-oxa-undecan-1,11-diamin, 4,8-Dioxa-undecan-1,11-diamin, 4,8-Dioxa-5-methyl-undecan-1,11-diamin, 4,8-Dioxa-5,6-dimethyl-undecan-1,11-diamin, 4,9-Dioxa-dodecan-1,12-diamin, 4,7,10-Trioxa-tridecan-1,13-diamin, 4,7,10-Trioxa-5,8-dimethyl-tridecan-1,13-diamin, 4,11-Dioxa-tetradecan-1,14-diamin, 4,7,11-Trioxa-tetradecan-1,14-diamin, 4,7,10,13-Tetraoxa-hexadecan-1,16-diamin, 4,7,10,13,16-Pentaoxa-nonadecan-1,19-diamin und 4,17-Dioxa-eicosane-1,20-diamin; und
(b2) 0-50 Mol-% bezogen auf die Summe der Molmengen der Monomerkomponenten (b1)+(b2)+(b3) mindestens eines linear-aliphatischen, verzweigt-aliphatischen, cyclo-aliphatischen und/oder aromatischen Diamins mit 2 bis 36, bevorzugt 4 bis 18, besonders bevorzugt 6 bis 15 C-Atomen; und
(b3) 0-50 Mol-% bezogen auf die Summe der Molmengen der Monomerkomponenten (b1)+(b2)+(b3) mindestens einer Verbindung aus der Gruppe bestehend aus Oligooxyethylendiaminen, Polyoxyalkylendiaminen und Polyalkylenglykolen; und
(c) 0-45 Mol-% mindestens eines Lactams und/oder mindestens einer Aminocarbonsäure;
wobei die Molmenge der Monomerkomponente (a) im Verhältnis zur Summe der Molmengen der Monomerkomponenten (b1)+(b2)+(b3) ein Molverhältnis im Bereich von 0.8 bis 1.2 aufweist, und
wobei sich der Anteil der Monomerkomponente (c) auf die molare Summe von allen das zumindest eine wasserlösliche Polyamid bildenden Monomerkomponenten (a)+(b1)+(b2)+(b3)+(c) bezieht.

Bei dieser Verwendung bzw. bei der Herstellung der Oberflächenbeschichtung wird in einem ersten Verfahrensschritt die Oberflächenbeschichtung bevorzugt aus einer wässrigen Lösung, die mindestens ein anspruchsgemässes wasserlösliches Polyamid umfasst, auf die Füllstoffe aufgebracht. Für diese Beschichtung aus einer wässrigen Lösung gibt es verschiedene Methoden. Bevorzugt ist das Eintauchen der Füllstoffe in einer solchen Lösung, so dass deren Oberfläche mit gelöstem Polyamid bedeckt wird, gefolgt von anschliessendem Trocknen und gegebenenfalls Zerkleinern des beschichteten Schüttguts in eine dosierbare Form. Endlosfasern lassen sich elegant und kontinuierlich auf diese Weise beschichten, indem solche Fadenbündel oder Rovings durch ein Tauchbad oder eine Serie von Tauchbädern gezogen werden, welche das gelöste wasserlösliche Polyamid und gegebenenfalls den Haftvermittler und optional weitere Bestandteile (Stoffe) enthalten. Nach der Trocknungsstufe können diese imprägnierten Rovings in dosierbare Stücke geschnitten werden. Sowohl Endlosfasern als auch teilchenförmige Füllstoffe lassen sich auch durch Besprühen mit einer entsprechenden Lösung beschichten. Ein bevorzugtes Verfahren für teilchenförmige Füllstoffe ist das Besprühen und Beschichten in einem Fliessbett bzw. in einem Wirbelschichtapparat, wo die Teilchen in einem fluidisierten Zustand gehalten werden. Beim Einsprühen der Lösung werden die bewegten Teilchen in einem vereinzelten Zustand beschichtet und auch in der Wirbelschicht getrocknet, so dass diese ideal rieselfähig bleiben und sich ein Zerkleinern von Agglomeraten nach der Beschichtung erübrigt.

Flammschutzmittel oder Flammschutzmittelkombinationen können beispielsweise in Anlehnung an EP 1 710 275 B1 mit den erfindungsgemässen wasserlöslichen Polyamiden beschichtet und in die gewünschte Anwendungsform (Grösse und Grössenverteilung der teilchenförmigen Füllstoffe) überführt werden.

Das Verfahren zur Behandlung von Fasern mit der erfindungsgemässen Schlichte (Oberflächenbeschichtungslösung) erfolgt durch deren Auftragung auf die Oberfläche, Entfernen der überschüssigen Schlichte und der thermischen Behandlung der beschichteten Fasern. Anschliessend können die Fasern (Stränge) geschnitten werden. Die Auftragung der Schlichte erfolgt beispielsweise durch eine übliche Sprühdüse bzw. mit einer Galette oder Applikator, wie z.B. in US 6,592,666 B1, WO 1999/026872 A1, WO 2001/049626 A2 oder EP 1 894 953 A2 für Glasfasern, und in US 4,420,512 B1 und EP 1 445 370 B1 für Kohlenstofffasern beschrieben. Die so beschichteten Fasern werden im Rahmen einer thermischen Behandlung getrocknet. Danach werden die Fasern aufgerollt (Roving) oder geschnitten (Stapelfaser). Die Trocknung erfolgt vorzugsweise in einem Temperaturbereich zwischen 80 und 200 °C.

Der mindestens eine erfindungsgemäss oberflächenbeschichtete Füllstoff wird zur Herstellung von gefüllten oder verstärkten thermoplastischen Kunststoff-Formmassen verwendet, bei welcher Herstellung der oberflächenbeschichtete Füllstoff bevorzugt in mindestens ein Polymer eingearbeitet wird, welches ausgewählt ist aus der Gruppe bestehend aus Polyamiden, Polycarbonaten, Polystyrol, Polyacrylaten, insbesondere Polymethacrylat und Polymethylmethacrylat, Acrylnitril-Butadien-Styrol-Copolymerisat, Acrylnitril-Styrol-Copolymer, funktionalisierten Polyolefinen, Polyoxymethylen, Polyestern, insbesondere Polyethylenterephthalat und Polybutylenterephthalat, Polysulfonen, insbesondere des Typs PSU, PESU und PPSU, Polyphenylenether, Polyphenylensulfid, Polyphenylenoxid, flüssigkristallinen Polymeren, Polyetherketon, Polyetheretherketon, Polyimid, Polyamidimid, Polyesterimid, Polyesteramid, Polyurethanen, insbesondere des Typs TPU, Polysiloxan, sowie Mischungen oder Copolymeren auf Basis dieser Polymere.

Bei einer besonders bevorzugten Verwendung umfasst das mindestens eine Polymer, in welches der mindestens eine oberflächenbeschichtete Füllstoff eingearbeitet wird, ein Polyamid.

Auch an dieser Stelle in Bezug auf das als Matrix-Polymer der Formmasse verwendete Polyamid soll angemerkt werden, dass "Polyamid" ein Oberbegriff ist, unter welchen Homopolyamide, Copolyamide, Polyetheramide, Polyetheresteramide, sowie Mischungen (Blends) von verschiedenen Polyamiden fallen.

Die Erfindung umfasst auch eine thermoplastische Kunststoff-Formmasse, die mindestens einen sich von Schichtsilikaten unterscheidenden Füllstoff enthält, der eine Oberflächenbeschichtung aufweist die ein wasserlösliches Polyamid oder mehrere wasserlösliche Polyamide umfasst, wobei zumindest eines dieser wasserlöslichen Polyamide durch Polykondensation aus folgenden Monomerkomponenten hergestellt ist:
(a) mindestens einer linear-aliphatischen, verzweigt-aliphatischen, cyclo-aliphatischen und/oder aromatischen Dicarbonsäure mit 6 bis 36 C-Atomen, bevorzugt mit 6 bis 18 C-Atomen, besonders bevorzugt mit 6 bis 12 C-Atomen; und
(b1) 25-100 Mol-% bezogen auf die Summe der Molmengen der Monomerkomponenten (b1)+(b2)+(b3) mindestens eines Diamins ausgewählt aus der Gruppe bestehend aus 4-Oxaheptan-1,7-diamin, 4,7-Dioxadecan-1,10-diamin, 4,7-Dioxa-5-methyl-decan-1,10-diamin, 6-oxa-undecan-1,11-diamin, 4,8-Dioxa-undecan-1,11-diamin, 4,8-Dioxa-5-methyl-undecan-1,11-diamin, 4,8-Dioxa-5,6-dimethyl-undecan-1,11-diamin, 4,9-Dioxa-dodecan-1,12-diamin, 4,7,10-Trioxa-tridecan-1,13-diamin, 4,7,10-Trioxa-5,8-dimethyl-tridecan-1,13-diamin, 4,11-Dioxa-tetradecan-1,14-diamin, 4,7,11-Trioxa-tetradecan-1,14-diamin, 4,7,10,13-Tetraoxa-hexadecan-1,16-diamin, 4,7,10,13,16-Pentaoxa-nonadecan-1,19-diamin und 4,17-Dioxa-eicosane-1,20-diamin; und
(b2) 0-50 Mol-% bezogen auf die Summe der Molmengen der Monomerkomponenten (b1)+(b2)+(b3) mindestens eines linear-aliphatischen, verzweigt-aliphatischen, cyclo-aliphatischen und/oder aromatischen Diamins mit 2 bis 36, bevorzugt 4 bis 18, besonders bevorzugt 6 bis 15 C-Atomen; und
(b3) 0-50 Mol-% bezogen auf die Summe der Molmengen der Monomerkomponenten (b1)+(b2)+(b3) mindestens einer Verbindung aus der Gruppe bestehend aus Oligooxyethylendiaminen, Polyoxyalkylendiaminen und Polyalkylenglykolen; und
(c) 0-45 Mol-% mindestens eines Lactams und/oder mindestens einer Aminocarbonsäure;
wobei die Molmenge der Monomerkomponente (a) im Verhältnis zur Summe der Molmengen der Monomerkomponenten (b1)+(b2)+(b3) ein Molverhältnis im Bereich von 0.8 bis 1.2 aufweist, und
wobei sich der Anteil der Monomerkomponente (c) auf die molare Summe von allen das zumindest eine wasserlösliche Polyamid bildenden Monomerkomponenten (a)+(b1)+(b2)+(b3)+(c) bezieht.

Bevorzugt enthält diese thermoplastische Kunststoff-Formmasse mindestens ein Polymer das ausgewählt ist aus der Gruppe bestehend aus Polyamiden, Polycarbonaten, Polystyrol, Polyacrylaten, insbesondere Polymethacrylat und Polymethylmethacrylat, Acrylnitril-Butadien-Styrol-Copolymerisat, Acrylnitril-Styrol-Copoly-mer, funktionalisierten Polyolefinen, Polyoxymethylen, Polyestern, insbesondere Polyethylenterephthalat und Polybutylenterephthalat, Polysulfonen, insbesondere des Typs PSU, PESU und PPSU, Polyphenylenether, Polyphenylensulfid, Polyphenylenoxid, flüssigkristallinen Polymeren, Polyetherketon, Polyetheretherketon, Polyimid, Polyamidimid, Polyesterimid, Polyesteramid, Polyurethanen, insbesondere des Typs TPU, Polysiloxan, sowie Mischungen oder Copolymeren auf Basis dieser Polymere.

Besonders bevorzugt umfasst das mindestens eine Polymer der Kunststoff-Formmasse ein Polyamid, sodass es sich um eine Polyamid-Formmasse handelt.

Bevorzugte erfindungsgemässe Ausführungsformen einer Polyamid-Formmasse enthalten faserförmige Füllstoffe mit einer erfindungsgemässen Oberflächenbeschichtung und/oder teilchenförmige Füllstoffe mit einer erfindungsgemässen Oberflächenbeschichtung. Eine bevorzugte Ausführungsform sind mit faserförmigen Füllstoffen verstärkte Polyamidformmassen, wobei die erfindungsgemäss beschichteten Füllstoffe zum Einsatz kommen. Eine weitere Ausführungsform betrifft Polyamidformmassen, bei denen sowohl die Verstärkungsfasern als auch gleichzeitig anwesenden teilchenförmige Füllstoffe erfindungsgemäss beschichtet sind. Besonders bevorzugt werden Formmassen enthaltend eine Kombination aus erfindungsgemäss beschichteten Verstärkungsfasern und erfindungsgemäss beschichteten Flammschutzmitteln und/oder wärmeleitfähigen Füllstoffen. Besonders bevorzugt werden Formmassen, die nebeneinander Glasfasern sowie teilchenförmige Füllstoffe allgemeiner Art und/oder Flammschutzmittel (als spezielle teilchenförmige Füllstoffe) und/oder wärmeleitfähige Additive (als spezielle teilchenförmige Füllstoffe) enthalten, wobei all diese Füllstoffe, d.h. Glasfasern, teilchenförmige Füllstoffe, Flammschutzmittel und wärmeleitfähige Additive erfindungsgemäss oberflächenbeschichtet sind.

Eine bevorzugte Polyamidformmasse enthält z.B. 5 - 45 Gew.-% oberflächenbeschichtete Glasfasern und 5 - 15 Gew.-% oberflächenbeschichtetes Flammschutzmittel. Eine andere bevorzugte Polyamidformmasse enthält z.B. 5 - 45 Gew.-% oberflächenbeschichtete faserförmige Füllstoffe (Glasfasern oder Kohlenstofffasern) und 5 - 35 Gew.-% oberflächenbeschichtete teilchenförmige Füllstoffe.

Eine bevorzugte wärmeleitende Polyamidformmasse enthält z.B. 40 - 85 Gew.-% oberflächenbeschichtetes Leitfähigkeitsadditiv.

Bevorzugte thermoplastische Formmassen mit hoher Wärmeleitfähigkeit enthalten
- 5 bis 95 Gew.-%, bevorzugt 20-80 Gew.-% eines thermoplastischen Polymeren, bevorzugt Polyamid, und
- 5 bis 95 Gew.-%, bevorzugt 20 bis 80 Gew.-%, besonders bevorzugt 40 bis 70 Gew.-% an Verbindungen der Elemente der 3. Hauptgruppe mit Elementen der 5. oder 6. Hauptgruppe des Periodensystems oder deren Gemische, bevorzugt Borverbindungen oder Aluminiumverbindungen, besonders bevorzugt Aluminiumoxid oder Bornitride, die mit mindestens einem erfindungsgemässen wasserlöslichen Polyamid oberflächlich beschichtet sind, und
- 0 bis 30 Gew.-%, bevorzugt 5 bis 20 Gew.-%, besonders bevorzugt 10 bis 15 Gew.-% eines thermisch und elektrisch leitfähigen Füllstoffes, bevorzugt Erscheinungsformen des Kohlenstoffs, insbesondere bevorzugt Graphit, der gegebenenfalls mit dem erfindungsgemässen wasserlöslichen Polyamid beschichtet ist, und
- 0 -25 Gew.-%, bevorzugt 5- 20 Gew.-% Glas- oder Kohlefasern, die gegebenenfalls mit dem erfindungsgemässen wasserlöslichen Polyamid beschichtet sind.

Zur Klarstellung soll hier noch angefügt werden, dass die Kunststoff-Formmassen bzw. Polyamid-Formmassen durchaus auch Schichtsilikate in unbeschichteter oder beschichteter Form enthalten können. Erfindungsgemäss und im Bereich des vorliegenden Schutzumfangs sind solche Kunststoff-Formmassen aber nur dann, wenn sie noch mindestens einen weiteren Füllstoff enthalten, der sich von Schichtsilikaten unterscheidet und der eine erfindungsgemässe Oberflächenbeschichtung aufweist.

Im Übrigen kann die Kunststoff-Formmasse bzw. das für die Formmasse verwendete Matrix-Polymer beliebige weitere Additive, wie z.B. Stabilisatoren, Kettenregler, Verarbeitungshilfsmittel, etc., enthalten.

Die erfindungsgemäss oberflächenbeschichteten Füllstoffe sind nicht klebrig, gut verarbeitbar und lassen sich insbesondere sehr gut in Polyamidformmassen dispergieren. Aufgrund der guten Adhäsions- und Benetzungseigenschaften resultieren bevorzugt gefüllte Polyamidformmassen, die sich durch eine gute Verarbeitbarkeit im Spritzgussprozess sowie durch gute mechanische Eigenschaften, insbesondere der Zähigkeit (Schlagzähigkeit und Kerbschlagzähigkeit) und der Bruchfestigkeit auszeichnen. Weiterhin zeigen die aus den erfindungsgemässen Formmassen gefertigten Bauteile eine Verbesserung im Ermüdungsverhalten bei mechanischer Wechselbeanspruchung auf, was zu einer längeren Lebensdauer der beanspruchten Teile führt. Ein weiterer Vorteil der erfindungsgemässen Formmassen ergibt sich daraus, dass die erfindungsgemäss beschichteten Füllstoffe im Vergleich zu Füllstoffen des Standes der Technik weniger flüchtige Bestandteile unter Wärmeeinfluss freisetzen (d.h. weniger ausgasen), so dass eine Belagsbildung bei der Verarbeitung oder ein Blistern des Formteils z.B. im Lötprozess weitgehend vermieden werden. Die wasserlöslichen Polyamide zeichnen sich darüber hinaus durch eine gute thermische Stabilität aus. Ein weiterer Vorteil, der sich bei der Verwendung der erfindungsgemässen Füllstoffe auf Grund der guten Verträglichkeit zur Polyamid-Matrix ergibt, sind glatte Oberflächen solcher Polyamidformmassen, was speziell bei dünnen Beschichtungen, die im Extrusionsverfahren aufgebracht werden, zum Tragen kommt.

Somit können durch die vorliegende Erfindung alternative oberflächenbeschichtete Füllstoffe zur Verfügung gestellt werden, die insbesondere in Polyamid-Formmassen zu unerwarteten Eigenschaftsvorteilen führen.

Im Folgenden wird die Herstellung der in den Beispielen verwendeten wasserlöslichen Polyamide beschrieben.

### Herstellung des wasserlöslichen Polyamids A1

59.82 kg Adipinsäure, 90.18 kg Trioxatridecandiamin und 10 kg Wasser wurden in einen Reaktor eingefüllt, mit Stickstoff inertisiert und auf 245 °C aufgeheizt. Sobald diese Temperatur erreicht wurde, begann die Entspannung: Nach Erreichen dieser Temperatur wurde der Reaktor innerhalb einer 1 h auf Normaldruck entspannt. Die Polymerschmelze wurde dann für eine weitere Stunde unter Rühren bei 245 °C gehalten, wobei das Reaktionswasser bei Normaldruck durch Überleiten von Stickstoff entfernt wurde. Nach Aufpressen von 5 bar Stickstoff wurde der Reaktorinhalt durch eine Düsenplatte ausgetragen. Nach Kühlung der Polymerstränge auf einem Fluidbett wurden diese granuliert. Das gebildete Polyetheramid hatte eine relative Lösungsviskosität von 1.93, eine COOH-Endgruppenkonzentration von 31 mmol/kg sowie eine NH₂-Endgruppenkonzentration von 38 mmol/kg und war gut kaltwasserlöslich.

### Herstellung des wasserlöslichen Polyamids A2

30.59 kg Adipinsäure, 40.45 kg Sebazinsäure, 90.18 kg Trioxatridecandiamin und 10 kg Wasser wurden in einen Reaktor eingefüllt, mit Stickstoff inertisiert und auf 245 °C aufgeheizt. Sobald diese Temperatur erreicht wurde, begann die Entspannung: Nach Erreichen dieser Temperatur wurde der Reaktor innerhalb einer 1 h auf Normaldruck entspannt. Die Polymerschmelze wurde dann für eine weitere Stunde unter Rühren bei 245 °C gehalten, wobei das Reaktionswasser bei Normaldruck durch Überleiten von Stickstoff entfernt wurde. Nach Aufpressen von 5 bar Stickstoff wurde der Reaktorinhalt durch eine Düsenplatte ausgetragen. Nach Kühlung der Polymerstränge auf einem Fluidbett wurden diese granuliert. Das gebildete Polyetheramid hatte eine relative Lösungsviskosität von 1.84, eine COOH-Endgruppenkonzentration von 30 mmol/kg sowie eine NH₂-Endgruppenkonzentration von 48 mmol/kg und war gut kaltwasserlöslich.

### Herstellung des wasserlöslichen Polyamids A3

59.82 kg Adipinsäure, 11.62 kg 1,6-Hexandiamin, 72.55 kg 4,7,10-Trioxatridecan-1,13-diamin und 10 kg Wasser wurden in einen Reaktor eingefüllt, mit Stickstoff inertisiert und auf 245 °C aufgeheizt. Sobald diese Temperatur erreicht wurde, begann die Entspannung: Nach Erreichen dieser Temperatur wurde der Reaktor innerhalb einer 1 h auf Normaldruck entspannt. Die Polymerschmelze wurde dann für eine weitere Stunde unter Rühren bei 245 °C gehalten, wobei das Reaktionswasser bei Normaldruck durch Überleiten von Stickstoff entfernt wurde. Nach Aufpressen von 5 bar Stickstoff wurde der Reaktorinhalt durch eine Düsenplatte ausgetragen. Nach Kühlung der Polymerstränge auf einem Fluidbett wurden diese granuliert. Das gebildete Polyetheramid hatte eine relative Lösungsviskosität von 1.90, eine COOH-Endgruppenkonzentration von 40 mmol/kg sowie eine NH₂-Endgruppenkonzentration von 45 mmol/kg und war gut kaltwasserlöslich.

Die Erfindung wird nachfolgend unter Verwendung von spezifischen Ausführungsbeispielen (mit erfindungsgemässer Beschichtung) beschrieben und mit den weniger leistungsfähigen Systemen nach dem Stand der Technik (Vergleichsbeispielen) verglichen. Die in der Folge angegebenen Ausführungsbeispiele dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

### Erfindungsgemässe Oberflächenbeschichtung (Schlichte) aus wasserlöslichem Polyamid A1, und Modellschlichten gemäss dem Stand der Technik PU1 und PU2

Die in der nachfolgenden Tabelle 1 aufgeführten Komponenten für die Oberflächenbeschichtung wurden bei 23°C unter Rühren mit 9 Teilen destilliertem Wasser gelöst bzw. verdünnt und zur Glasfaserrovingbeschichtung verwendet.

Die nackten E-Glasfaserrovings wurden mit einer Pilotspinnanlage unter industrienahen Bedingungen gefertigt. Dazu wurden E-Glaskugeln mit einem Durchmesser von ungefähr 20 mm in einer Schmelzewanne geschmolzen und bei 1200°C durch ein Bushing mit 204 Düsen zu runden Endlosfasern gezogen. Die Abzugsgeschwindigkeit wurde so eingestellt, dass ein mittlerer Faserdurchmesser von 10 Mikrometern resultierte. Die heissen Fasern wurden durch Besprühen mit Wasser abgekühlt und über eine Tauchrolle mit einer der oben beschriebenen Beschichtungslösungen benetzt. Anschliessend wurden die 204 Einzelfilamente zu einem Rovingstrang mit Gesamttiter 40 tex gebündelt und bei 100°C für drei Stunden im Vakuumofen getrocknet. Der entsprechende Trockengewichtsanteil der Oberflächenbeschichtung wurde anschliessend an einem 1 m langen Rovingstrang über die Gewichtsdifferenz vor und nach 15 min Heizen unter Stickstoff bei 600°C ermittelt. Die prozentuale Gewichtsabnahme durch die Pyrolyse der organischen Oberflächenbeschichtung entspricht dem Trockengewichtsanteil. Über eine einstellbare Abstreifvorrichtung an der zur Beschichtung dienenden Tauchrolle wurde der Trockengewichtsanteil der Beschichtung für alle Muster einheitlich auf 0,6 Gewichtsprozent eingestellt.

**Tabelle 1: Zusammensetzung (Gew.-% bezogen auf Trockenmasse) der zur Beschichtung der Glasfaserstränge verwendeten Materialien, sowie Temperaturstabilität der Filmbildnerkomponente**

| **Beschichtungslösung** (1 Teil der angegebenen Komponenten werden mit 9 Teilen Wasser gemischt) | **PA1** | **PU1** | **PU2** |
|---|---|---|---|
| **Filmbildner** | | | |
| Wasserlösliches Polyamid A1 | 65% | | |
| Neoxil^{®} 5521 [Polyurethanemulsion] | | 82% | |
| Baybond^{®} PU 1810 [Polyesterurethan Dispersion] | | | 46% |
| Baybond^{®} XL 825 [Vernetzer] | | | 27% |

| **Haftverm ittler** | | | |
|---|---|---|---|
| Dynasilan^{®} AMEO | 10% | 5% | 8% |
| Dynasilan^{®} 1175 | 25% | 13% | 19% |
| **Thermische Stabilität Filmbildner** | 430°C | 375 °C | 380 °C |

### Legende zur obigen Tabelle 1:

Die in Tabelle 1 aufgeführten kommerziellen Filmbildner, Vernetzer und Haftvermittler zur Glasfaserherstellung können noch weitere, von den Herstellern nicht deklarierte Zusätze wie Tenside, Stabilisatoren, Weichmacher oder Anstistatika enthalten:
- Neoxil^{®} 5521:: Milchig weisse nicht-ionische Polyurethanemulsion, 30% nichtflüchtiger Anteil; DSM Composite Resins AG, Schweiz.
- Baybond^{®} PU 1810:: Nicht-ionisches Polyesterurethan-Polymer, milchig weisse Dispersion in Wasser, 60% nichtflüchtiger Anteil, Bayer Material-Science AG, Deutschland.
- Baybond^{®} XL 825:: Geblocktes aliphatisches Polyisocyanat auf Wasserbasis als Vernetzer für Polyurethane, 30% nichtflüchtiger Anteil; von Bayer MaterialScience AG, Deutschland.
- Dynasylan^{®} AMEO :: Ethoxysilan mit reaktiven primären Aminogruppen, Evonik Industries AG, Deutschland.
- Dynasilan^{®} 1175:: Kationisches polymeres Methoxysilan mit reaktiven Aminogruppen, 40%ige methanolische Lösung, Evonik Industries AG, Deutschland.

### Thermische Stabilität Filmbildner

Die Bestimmung der Zersetzungstemperatur der filmbildenden Bestandteile (Filmbildner) ohne Haftvermittler erfolgte wie folgt: Polyamid A1 wurde in 9 Teilen destilliertem Wasser gelöst und das Wasser bei Raumtemperatur in einer 80 mm Petrischale über Nacht verdunstet. Bei PU1 wurde die Polyurethanemulsion mit 9 Teilen destilliertem Wasser verdünnt und der Rückstand nach Verdunsten 20 min bei 135°C im Ofen vorgehärtet. Bei PU2 wurde der Härter während 5 Minuten unter Rühren zur 15-fach verdünnten Polyesterurethan Dispersion gegeben. Der Rückstand nach Verdunsten wurde anschliessend ebenfalls 20 min bei 135°C vorgehärtet. 10 mg des jeweiligen Filmbildnersystems wurden im TGA Analysator mit einer Aufheizrate von 20K/min auf 800°C aufgeheizt. Ab 600°C wurde das Spülmedium Stickstoff durch Luft ersetzt. Das Maximum der ersten Ableitung der Massendifferenz gegen die Temperatur entspricht dem in Tabelle 1 angegebenen Wert für die Thermische Stabilität.

### Beispiele B7 bis B9 und Vergleichsbeispiele VB7 bis VB9:

Die Herstellung von Compounds aus den mit PA1, PU1 oder PU2 (siehe Tabelle 1) beschichteten Glasfaserrovings und den in Tabelle 3 aufgeführten Polyamidgranulaten sowie Zusatzstoffen erfolgte auf einem 36D langen Doppelschneckenextruder ZSE 27 MAXX (Leistritz, Nürnberg) mit einem Schneckendurchmesser von 27 mm. Jeweils 15 Spulen der geschlichteten (beschichteten) Rovings mit Titer von je 40 tex wurden durch Fachen zu 600 tex Rovingsträngen assembliert und auf 30 cm lange Pappkartonhülsen mit 3 Zoll Innendurchmesser aufgewickelt. Jeweils 4 solcher assemblierter Rovingstränge mit je 600 tex wurden bei 18D (d.h. halber Schneckenlänge) durch einen Sidefeeder dem Extruder zugeführt. Durch eine vorangehende Kalibrierung mit 2400 tex Standardglasfaserrovings wurde die für einen Glasfasergehalt von 40 Gew.-% richtige Extruder-Schneckendrehzahl ermittelt (vgl. Compoundierparameter in Tabelle 2).

Die in Tabelle 3 angegebenen Polyamidgranulate sowie die Zusatzstoffe wurden alle zusammen in die Einzugszone des Doppelschneckenextruders dosiert. Die wichtigsten Prozessparameter sind in Tabelle 2 zusammengefasst.

Der extrudierte Strang wurde im Wasserbad gekühlt und kontinuierlich granuliert. Das Granulat wurde 24 Stunden bei 110 °C im Vakuum von 30 mbar getrocknet.

### Verarbeitung:

Die durch Compoundierung hergestellten Formmassen (Granulate) aller Beispiele und Vergleichsbeispiele wurden mit einer Spritzgussmaschine Arburg Allrounder 320-210-750 zu Probekörpern bei definierten Zylindertemperaturen der Zonen 1 bis 4 und einer definierten Werkzeugtemperatur (siehe Tabelle 2) verspritzt.

**Tabelle 2: Compoundier- und Spritzgussbedingungen für die Beispiele und Vergleichsbeispiele**

| **Compoundier- und Verarbeitungsparameter** | | Bedingungen für Beispiele und Vergleichsbeispiele | | | | | | |
|---|---|---|---|---|---|---|---|---|
| | | **1** | **2, 6** | **3, 4** | **5** | **7** | **8** | **9** |
| Compoundierung | Zylindertemperaturen | 250 | 280 | 330 | 330 | 280 | 330 | 330 |
| | [°C] | | | | | | | |
| | Schneckendrehzahl | 200 | 200 | 150 | 150 | 300 | 300 | 300 |
| | [U/min] | | | | | | | |
| | Durchsatz | 15 | 15 | 8 | 8 | 7.5 | 7.5 | 7.5 |
| | [kg/h] | | | | | | | |
| Spritzguss | Zylindertemperaturen | 240 | 280 | 330 | 330 | 280 | 330 | 330 |
| | [°C] | | | | | | | |
| | Werkzeugtemperatur | 80 | 80 | 140 | 140 | 100 | 140 | 140 |
| | [°C] | | | | | | | |
| | Schneckenumfangsgeschwindigkeit | 15 | 15 | 15 | 15 | 15 | 15 | 15 |
| | [m/s] | | | | | | | |

### Erläuterung zur Tabelle 2:

Bei der Compoundierung der Beispiele (und Vergleichsbeispiele) 7, 8 und 9 kam der erwähnte Doppelschneckenextruder ZSE 27 MAXX (Leistritz, Nürnberg) zum Einsatz, bei den weiter hinten beschriebenen Beispielen (und Vergleichbeispielen) 1 bis 6 hingegen ein dort erwähnter zweiwelliger Extruder der Firma Werner und Pfleiderer mit Schneckendurchmesser 25 mm. Der Durchsatz wurde dabei durch die Feed-Dosierung in die Einzugszone des jeweiligen Extruders bestimmt. Der Spritzguss zu den Probe- und Prüfkörpern erfolgte aber wie vorangehend erwähnt bei allen Beispielen (und Vergleichsbeispielen) auf derselben Spritzgussmaschine.

**Tabelle 3: Zusammensetzung und Eigenschaften der Beispiele B7 bis B9 und der Vergleichsbeispiele VB7 bis VB9**

| **Zusammensetzung** | **Einheit** | **B7** | **VB7-1** | **VB7-2** | **B8** | **VB8-1** | **VB8-2** | **B9** | **VB9-1** | **VB9-2** |
|---|---|---|---|---|---|---|---|---|---|---|
| PA 66 | Gew.-% | 44.68 | 44.68 | 44.68 | | | | | | |
| PA 6T/6I | Gew.-% | | | | 59.58 | 59.58 | 59.58 | 53.58 | 53.58 | 53.58 |
| PA 6I/6T | Gew.-% | 14.9 | 14.9 | 14.9 | | | | | | |
| SZM | Gew.-% | | | | | | | 6 | 6 | 6 |
| Additiv 1 | Gew.-% | 0.12 | 0.12 | 0.12 | 0.15 | 0.15 | 0.15 | 0.15 | 0.15 | 0.15 |
| Additiv 2 | Gew.-% | 0.30 | 0.30 | 0.30 | 0.15 | 0.15 | 0.15 | 0.15 | 0.15 | 0.15 |
| Additiv 3 | Gew.-% | | | | 0.12 | 0.12 | 0.12 | 0.12 | 0.12 | 0.12 |
| Glasfaser + 0.6% PA1 | Gew.-% | 40 | | | 40 | | | 40 | | |
| Glasfaser + 0.6% PU1 | Gew.-% | | 40 | | | 40 | | | 40 | |
| Glasfaser + 0.6% PU2 | Gew.-% | | | 40 | | | 40 | | | 40 |

| **Eigenschaften Granulat** | | | | | | | | | | |
|---|---|---|---|---|---|---|---|---|---|---|
| Glasfaserlänge | µm | 308 | 308 | 269 | 289 | 298 | 296 | 281 | 276 | 268 |
| Glasfaserlänge D10 | µm | 88 | 81 | 83 | 76 | 105 | 86 | 77 | 86 | 70 |
| Glasfaserlänge D50 | µm | 264 | 268 | 241 | 233 | 269 | 262 | 253 | 245 | 236 |
| Glasfaserlänge D90 | µm | 576 | 581 | 489 | 605 | 524 | 541 | 519 | 500 | 519 |

| **Mechanische Materialeigenschaften trocken** | | | | | | | | | | |
|---|---|---|---|---|---|---|---|---|---|---|
| Zug-E-Modul | MPa | 11400 | 11600 | 11800 | 12500 | 12900 | 12800 | 11600 | 11200 | 11500 |
| Maximale Zugfestigkeit | MPa | 205 | 205 | 205 | 235 | 240 | 235 | 225 | 220 | 220 |
| Bruchdehnung | % | 4.1 | 3.7 | 4.0 | 2.3 | 2.3 | 2.2 | 3.1 | 2.8 | 2.8 |
| Schlagzähigkeit | kJ/m² | 96 | 89 | 97 | 63 | 66 | 64 | 92 | 90 | 89 |
| Kerbschlagzähigkeit | kJ/m² | 94 | 96 | 94 | 5.1 | 6.1 | 6.2 | | | |

| **Mechanische Materialeigenschaften konditioniert** | | | | | | | | | | |
|---|---|---|---|---|---|---|---|---|---|---|
| **Zusammensetzung** | **Einheit** | **B7** | **VB7-1** | **VB7-2** | **B8** | **VB8-1** | **VB8-2** | **B9** | **VB9-1** | **VB9-2** |
| Zug-E-Modul | MPa | 10.4 | 11.1 | 10.9 | | | | | | |
| Zugfestigkeit | MPa | 165 | 160 | 165 | | | | | | |
| Streckdehnung | % | 3.9 | 3.6 | 3.8 | | | | | | |
| Schlagzähigkeit | kJ/m² | 94 | 96 | 94 | | | | | | |
| Kerbschlagzähigkeit | kJ/m² | 11.0 | 10.9 | 12.1 | | | | | | |

| **Emission** | | | | | | | | | | |
|---|---|---|---|---|---|---|---|---|---|---|
| Emission 120 °C | µg/g | | | | 1.2 | 4.2 | 2.3 | | | |
| Emission 200 °C | µg/g | | | | 7.2 | 65.0 | 12.9 | | | |

| | | | | | | | | | | |
|---|---|---|---|---|---|---|---|---|---|---|
| **Legende zur Tabelle 3** PA 66 Teilkristallines, aliphatisches Polyamid aus 1,6-Hexandiamin und Adipinsäure, mit einem Schmelzpunkt von 260°C und einer relativen Lösungsviskosität von 1.85. PA 6T/6I XE 3733 NK natur: Teilkristallines, partiell aromatisches Polyamid aus 1,6-Hexandiamin, Terephthalsäure und Isophthalsäure, mit einem Schmelzpunkt von 335°C; von EMS-Chemie AG, Schweiz. PA 6I/6T Grivory G21 natur: Amorphes, partiell aromatisches Polyamid aus 1,6-Hexandiamin, Isophthalsäure und Terephthalsäure; von EMS-Chemie AG, Schweiz. SZM Schlagzähmodifikator Lotader^{®} AX8840: Statistisches Copolymer aus Ethylen und Glycidylmethacrylat; von Arkema, Frankreich. Additiv 1: Hostanox^{®} PAR 24, Tris(2,4-di-tert-butylphenyl)phosphit; Handelsprodukt der Firma Clariant, Schweiz. Additiv 2: Irganox^{®} 1098, N,N'-Hexamethylen-bis-3,5-di-tert.-butyl-4-hydroxyhydrocinnamid; Handelsprodukt der BASF SE, Deutschland. Additiv 3: Brüggolen^{®} P22, Nukleierungsmittel für Polyamide auf der Basis von Kondensationsprodukten der Oxalsäure mit Ethylendiamin; von Brüggemann Chemical, Heilbronn, Deutschland. | | | | | | | | | | |

### Beispiele B1 bis B6 und Vergleichsbeispiele VB1 bis VB6:

Die in den Tabellen 4 und 5 angegebenen Komponenten wurden in einem zweiwelligen Extruder der Firma Werner und Pfleiderer mit einem Schneckendurchmesser von 25 mm bei vorgegebenen Prozessparametern (siehe Tabelle 2) compoundiert, wobei die Polyamidgranulate sowie die Zusatzstoffe in die Einzugszone dosiert wurden, während die Glasfasern über einen Sidefeeder 3 Gehäuseeinheiten vor der Düse in die Polymerschmelze dosiert wurden. Die Formmassen gemäss Tabelle 4 wurden als Strang aus einer Düse mit 3 mm Durchmesser abgezogen und nach Wasserkühlung granuliert. Das Granulat wurde 24 Stunden bei 110 °C im Vakuum von 30 mbar getrocknet. Bei den Formmassen aus Tabelle 5 erfolgte die Granulierung mittels einer Unterwassergranulierung bzw. Heissabschlags unter Wasser, bei der die Polymerschmelze durch eine Lochdüse gedrückt und direkt nach dem Austritt aus der Düse von einem rotierenden Messer in einem Wasserstrom granuliert wurde. Nach Granulierung und Trocknung bei 120 °C für 24h wurden die Granulateigenschaften gemessen und die Prüfkörper für die Messungen der weiteren in den Tabellen 4 und 5 aufgeführten Eigenschaften hergestellt.

**Tabelle 4: Zusammensetzung und Eigenschaften der Beispiele B1 und B2 und der Vergleichsbeispiele VB1 und VB2**

| **Zusammensetzung** | **Einheit** | **VB1** | **B1-1** | **B1-2** | **VB2** | **B2-1** | **B2-2** |
|---|---|---|---|---|---|---|---|
| PA 12 | Gew.-% | 50 | 50 | 50 | | | |
| PA 66 | Gew.-% | | | | 50 | 50 | 50 |
| Glasfaser A1 | Gew.-% | | 50 | | | 50 | |
| Glasfaser A2 | Gew.-% | | | 50 | | | 50 |
| Glasfaser B | Gew.-% | 50 | | | 50 | | |

| **Eigenschaften** | | | | | | | |
|---|---|---|---|---|---|---|---|
| Zug-E-Modul | MPa | 11900 | 11600 | 11800 | 16000 | 15500 | 15600 |
| Bruchfestigkeit | MPa | 144 | 160 | 162 | 220 | 230 | 230 |
| Bruchdehnung | % | 3.3 | 4.0 | 3.9 | 3.5 | 4.0 | 4.2 |
| Schlagzähigkeit | kJ/m² | 62 | 70 | 75 | 84 | 90 | 92 |
| Kerbschlagzähigkeit | kJ/m² | 16 | 18 | 20 | 12 | 14 | 15 |
| HDT A | °C | 169 | 170 | 170 | 250 | 250 | 255 |
| HDT C | °C | 133 | 135 | 134 | 220 | 222 | 224 |

**Tabelle 5: Zusammensetzung und Eigenschaften der Beispiele B3 bis B6 und der Vergleichsbeispiele VB3 bis VB6**

| **Zusammensetzung** | **Einheit** | **VB3** | **B3** | **VB4** | **B4** | **VB5** | **B5** | **VB6** | **B6** |
|---|---|---|---|---|---|---|---|---|---|
| PA 10T/6T | Gew.-% | 35 | 35 | 44 | 44 | 57 | 57 | | |
| PA 12 | Gew.-% | | | | | | | 39.4 | 39.4 |
| SZM | Gew.-% | 4 | 4 | 5 | 5 | | | | |
| S/V-Paket | Gew.-% | 1 | 1 | 1 | 1 | 1 | 1 | 0.6 | 0.6 |
| Glasfaser A3 | Gew.-% | | 10 | | | | 30 | | |
| Glasfaser B | Gew.-% | 10 | | | | 30 | | | |
| Exolit^{®} OP 1230 | Gew.-% | | | | | 12 | | | |
| Aluminiumdiethylphosphinat beschichtet mit wasserlöslichem Polyamid A1 (2.5 Gew.-% bez. auf diesen Füllstoff) | Gew.-% | | | | | | 12 | | |
| Bornitrid B | Gew.-% | 50 | | 50 | | | | 60 | |
| Bornitrid A3 | Gew.-% | | 50 | | 50 | | | | 60 |

| **Eigenschaften** | | | | | | | | | |
|---|---|---|---|---|---|---|---|---|---|
| Zug-E-Modul | MPa | 13800 | 13700 | 8600 | 8500 | 10900 | 10800 | 7900 | 7800 |
| Bruchfestigkeit | MPa | 56 | 65 | 51 | 55 | 154 | 175 | 42 | 51 |
| Bruchdehnung | % | 0.5 | 0.8 | 1.3 | 1.8 | 2.9 | 3.5 | 1.4 | 2.1 |
| Schlagzähigkeit | kJ/m² | 8.6 | 12 | 6.0 | 9.2 | | | 14 | 21 |
| Kerbschlagzähigkeit | kJ/m² | 4.7 | 6.3 | 3.2 | 4.5 | | | 3.2 | 4.3 |
| HDT A | °C | 243 | 245 | 172 | 175 | >280 | >280 | 132 | 130 |
| HDT C | °C | 134 | 138 | 112 | 111 | 190 | 198 | 86 | 90 |
| Wärmeleitfähigkeit Through Plane / In plane (UL 3.2 mm) | W/mK | 1.7 / 7.3 | 2.0 / 7.7 | 1.3 / 5.0 | 1.8 / 7.0 | | | 1.7 / 8.9 | 1.6 / 8.7 |
| Brandklassifizierung UL94 (0.8 mm) | | | | | | V0 | V0 | | |

| | | | | | | | | | |
|---|---|---|---|---|---|---|---|---|---|
| **Legende zu den Tabellen 4 und 5** PA 10T/6T Teilaromatisches Polyamid aus Terephthalsäure, 1,10-Decandiamin (85 Mol-%) und 1,6-Hexandiamin (15 Mol-%), mit einem Schmelzpunkt von 307 °C und einer relativen Lösungsviskosität von 1.64. PA 66 Teilkristallines, aliphatisches Polyamid aus 1,6-Hexandiamin und Adipinsäure, mit einem Schmelzpunkt von 260°C und einer relativen Lösungsviskosität von 1.85. PA 12 Teilkristallines, aliphatisches Polyamid aus Laurinlactam, mit einem Schmelzpunkt von 178°C und einer relativen Lösungsviskosität von 1.90. Glasfaser B Schnittglasfasern Vetrotex 995 aus E-Glas, mit einer Länge von 4.5 mm und einem Durchmesser von 10 µm (kreisförmiger Querschnitt) von Owens Corning Fiberglas, beschichtet mit Polyurethanharz (Stand der Technik). Glasfaser A1 Schnittglasfasern aus E-Glas, mit einer Länge von 4.5 mm und einem Durchmesser von 10 µm (kreisförmiger Querschnitt), beschichtet mit wasserlöslichem Polyamid A1 unter Verwendung der Beschichtungslösung PA1 (Tabelle 1). Das Trockengewicht der Beschichtung beträgt 1.1 Gew.-% bezogen auf die beschichteten Glasfasern. Glasfaser A2 Schnittglasfasern aus E-Glas, mit einer Länge von 4.5 mm und einem Durchmesser von 10 µm (kreisförmiger Querschnitt), beschichtet mit wasserlöslichem Polyamid A2 unter Verwendung einer zu PA1 analogen Beschichtungslösung, bei der das wasserlösliche Polyamid A1 durch das wasserlösliche Polyamid A2 ausgetauscht wurde. Das Trockengewicht der Beschichtung beträgt 1.2 Gew.-% bezogen auf die beschichteten Glasfasern. Glasfaser A3 Schnittglasfasern aus E-Glas, mit einer Länge von 4.5 mm und einem Durchmesser von 10 µm (kreisförmiger Querschnitt), beschichtet mit wasserlöslichem Polyamid A3 unter Verwendung einer zu PA1 analogen Beschichtungslösung, bei der das wasserlösliche Polyamid A1 durch das wasserlösliche Polyamid A3 ausgetauscht wurde. Das Trockengewicht der Beschichtung beträgt 0.8 Gew.-% bezogen auf die beschichteten Glasfasern. Bornitrid B Carbotherm PTCP 30 von St. Gobain Ceramics. Bornitrid A3 Hexagonales Bornitrid mit einer mittleren Partikelgrösse von 30 µm (D50), beschichtet mit reinem wasserlöslichen Polyamid A3. Der Anteil von Polyamid A3 bezogen auf das beschichteten Bornitrid beträgt 2.4 Gew.-%. Exolit^{®} OP 1230 Flammschutzmittel von der Firma Clariant, mit Hauptbestandteil Aluminiumdiethylphosphinat. SZM Lotader^{®} AX8840 (Schlagzähmodifikator). S/V-Paket Mischung aus einer Standard-Hitzestabilisierung für Polyamide und Verarbeitungshilfsmitteln, wie z.B. Gleitmittel. | | | | | | | | | |

Die Messungen der Eigenschaften wurden nach folgenden Normen und an folgenden Prüfkörpern durchgeführt:

### Zug-E-Modul:

ISO 527 mit einer Zuggeschwindigkeit von 1 mm/min
ISO-Zugstab, Norm: ISO/CD 3167, Typ Al, 170 x 20/10 x 4 mm,
Temperatur 23°C

### Bruchfestigkeit, Bruchdehnung:

ISO 527 mit einer Zuggeschwindigkeit von 5 mm/min
ISO-Zugstab, Norm: ISO/CD 3167, Typ Al, 170 x 20/10 x 4 mm,
Temperatur 23°C

### Schlagzähigkeit, Kerbschlagzähigkeit nach Charpy:

ISO 179
ISO-Prüfstab, Norm: ISO/CD 3167, Typ B1, 80x10x4 mm
bei Temperatur 23 °C

### Schmelzpunkt (Tm), Schmelzenthalpie (ΔHm) und Glasumwandlungstemperatur (Tg):

ISO-Norm 11357-11-2
Granulat
Die Differential Scanning Calorimetry (DSC) wurde mit einer Aufheizrate von 20 °C/min durchgeführt. Für die Glasumwandlungstemperatur (Tg) wird die Temperatur für die Mittelstufe bzw. den Wendepunkt angegeben.

### Relative Viskosität (= relative Lösungsviskosität):

DIN EN ISO 307
Granulat
0.5 g Polyamid gelöst in 100 ml m-Kresol,
Messung bei Temperatur 20°C
Berechnung der relativen Viskosität (RV) nach RV = t/to in Anlehnung an Abschnitt 11 der Norm.

### HDT A (1.8 MPa) und HDT C (8 MPa):

Die Bestimmung von HDT A (1.8 MPa) und HDT C (8 MPa) erfolgte gemäß
der ISO 75 an einem ISO-Schlagstab mit den Dimensionen 80x10x4 mm.

### Wärmeleitfähigkeit:

Gemäss DIN EN 821 an sogenannten V0-Stäben 125 x 13 x 3.2 mm mit
LFA 447 Nanoflash von Netzsch-Gerätebau, Selb, Deutschland

### Vertikaler Brandtest:

UL-94 Underwriters Laboratories
Prüfstab 125 x 13 x 0.8 mm

### Glasfaserlänge:

Nach ISO/DIS 22314 an jeweils mindestens 7000 Glasfasern mit dem FASEP-Berichtssystem der Firma High Precision Dipl.-Ing. (TH) Norbert Höhn, Darmstadt, Deutschland, ermittelte gewichtsgemittelte Faserlänge. Glasfaserlänge D10, D50, D90: Faserlänge, bei der 10, 50, 90 Gew.-% der Fasern kürzer sind als der angegebene Wert.

### Emission (Ausgasung):

100 mg Granulat wurden in einem Probenröhrchen zunächst für 60 Minuten bei 120°C (FOG-Bedingungen nach VDA278) und anschliessend bei 200°C für 45 Minuten geheizt und die freigesetzten Verbindungen mittels GC (FID) quantitativ analysiert. Zur Auswertung wurden alle im Chromatogramm vorhandenen Peaks integriert und als Toluol-Äquivalent in µg/g berechnet.

Die Versuchsresultate der Tabellen 3, 4 und 5 zeigen die generelle Eignung von wasserlöslichen Polyamiden für die Beschichtung von Füllstoffen in Polyamidformmassen auf. Bruchfestigkeit, Schlagzähigkeit und Kerbschlagzähigkeit sowie die Emission der erfindungsgemässen Polyamid-Formmassen mit erfindungsgemäss oberflächenbeschichteten Füllstoffen sind gegenüber dem Stand der Technik gleich oder verbessert. Die thermische Stabilität des Filmbildners konnte ebenfalls verbessert werden. Die thermische Stabilität des wasserlöslichen Polyamids liegt 55-60°C über derjenigen der bekannten Polyurethan-Filmbildner. Besonders eindrücklich ist diese Verbesserung angesichts der Tatsache, dass in der US 5,804,313, die eingangs gewürdigt wurde, die Verwendung eines herkömmlichen wasserlöslichen Polyamids in der Glasfaserschlichte im Vergleich zu Glasfasern mit einer Polyurethanschlichte mit einer Verschlechterung der mechanischen Eigenschaften der damit verstärkten Polyamid-Formmassen einher ging. In den vorliegenden Erfindungsbeispielen wurden jedoch mit anspruchsgemässen wasserlöslichen Polyamiden signifikant bessere Eigenschaften erzielt, und zwar ebenfalls im Vergleich zu Glasfasern (Glasfaser B) mit Polyurethanbeschichtung, also bei gleicher Vergleichsbasis. Dieser überraschende Effekt war für einen Fachmann nicht vorherzusehen. Die vorliegende Erfindung leistet damit einen wertvollen Beitrag zur Verbesserung der Qualität von gefüllten und/oder verstärkten thermoplastischen Kunststoff-Formmassen, insbesondere entsprechenden Polyamid-Formmassen.

## Patentansprüche

1. Füllstoffe, ausgenommen Schichtsilikate, die eine Oberflächenbeschichtung aufweisen, wobei diese Oberflächenbeschichtung ein wasserlösliches Polyamid oder mehrere wasserlösliche Polyamide umfasst, **dadurch gekennzeichnet, dass** zumindest eines dieser wasserlöslichen Polyamide durch Polykondensation aus folgenden Monomerkomponenten hergestellt ist:
(a) mindestens einer linear-aliphatischen, verzweigt-aliphatischen, cyclo-aliphatischen und/oder aromatischen Dicarbonsäure mit 6 bis 36 C-Atomen, bevorzugt mit 6 bis 18 C-Atomen, besonders bevorzugt mit 6 bis 12 C-Atomen; und
(b1) 25-100 Mol-% bezogen auf die Summe der Molmengen der Monomerkomponenten (b1)+(b2)+(b3) mindestens eines Diamins ausgewählt aus der Gruppe bestehend aus 4-Oxaheptan-1,7-diamin, 4,7-Dioxadecan-1,10-diamin, 4,7-Dioxa-5-methyl-decan-1,10-diamin, 6-oxa-undecan-1,11-diamin, 4,8-Dioxa-undecan-1,11-diamin, 4,8-Dioxa-5-methyl-undecan-1,11-diamin, 4,8-Dioxa-5,6-dimethyl-undecan-1,11-diamin, 4,9-Dioxa-dodecan-1,12-diamin, 4,7,10-Trioxa-tridecan-1,13-diamin, 4,7,10-Trioxa-5,8-dimethyl-tridecan-1,13-diamin, 4,11-Dioxatetradecan-1,14-diamin, 4,7,11-Trioxa-tetradecan-1,14-diamin, 4,7,10,13-Tetraoxa-hexadecan-1,16-diamin, 4,7,10,13,16-Pentaoxanonadecan-1,19-diamin und 4,17-Dioxa-eicosane-1,20-diamin; und
(b2) 0-50 Mol-% bezogen auf die Summe der Molmengen der Monomerkomponenten (b1)+(b2)+(b3) mindestens eines linear-aliphatischen, verzweigt-aliphatischen, cyclo-aliphatischen und/oder aromatischen Diamins mit 2 bis 36, bevorzugt 4 bis 18, besonders bevorzugt 6 bis 15 C-Atomen; und
(b3) 0-50 Mol-% bezogen auf die Summe der Molmengen der Monomerkomponenten (b1)+(b2)+(b3) mindestens einer Verbindung aus der Gruppe bestehend aus Oligooxyethylendiaminen, Polyoxyalkylendiaminen und Polyalkylenglykolen; und
(c) 0-45 Mol-% mindestens eines Lactams und/oder mindestens einer Aminocarbonsäure;
wobei die Molmenge der Monomerkomponente (a) im Verhältnis zur Summe der Molmengen der Monomerkomponenten (b1)+(b2)+(b3) ein Molverhältnis im Bereich von 0.8 bis 1.2 aufweist, und
wobei sich der Anteil der Monomerkomponente (c) auf die molare Summe von allen das zumindest eine wasserlösliche Polyamid bildenden Monomerkomponenten (a)+(b1)+(b2)+(b3)+(c) bezieht.

2. Füllstoffe gemäss Anspruch 1, **dadurch gekennzeichnet, dass** für zumindest eines der wasserlöslichen Polyamide der Oberflächenbeschichtung als Monomerkomponente (a) Adipinsäure und/oder Sebazinsäure, als Monomerkomponente (b1) 4,7,10-Trioxa-tridecan-1,13-diamin und/oder 4,7,10,13-Tetraoxahexadecan-1,16-diamin, und gegebenenfalls als Monomerkomponente (b2) Hexandiamin ausgewählt sind.

3. Füllstoffe gemäss einem der vorhergehenden Ansprüche, **dadurch gekennzeichnet, dass** die Oberflächenbeschichtung zu mindestens 50 Gew.-%, bevorzugt zu mindestens 70 Gew.-%, besonders bevorzugt zu mindestens 90 Gew.-%, und ganz besonders bevorzugt ausschliesslich aus mindestens einem wasserlöslichen Polyamid gemäss Anspruch 1 oder 2 besteht.

4. Füllstoffe gemäss einem der vorhergehenden Ansprüche, **dadurch gekennzeichnet, dass** die Oberflächenbeschichtung zusätzlich zu dem mindestens einen wasserlöslichen Polyamid mindestens einen Haftvermittler umfasst, wobei der mindestens eine Haftvermittler bevorzugt 10 bis 50 Gew.-% der Oberflächenbeschichtung, bezogen auf die als Trockenmasse berechnete Gesamtmasse der Oberflächenbeschichtung ausmacht.

5. Füllstoffe gemäss einem der Ansprüche 1 bis 3, **dadurch gekennzeichnet, dass** die Oberflächenbeschichtung kein Netzmittel und keinen Haftvermittler enthält.

6. Füllstoffe gemäss einem der vorhergehenden Ansprüche, **dadurch gekennzeichnet, dass** die Füllstoffe ausgewählt sind aus anorganischen und/oder organischen Stoffen.

7. Füllstoffe gemäss einem der vorhergehenden Ansprüche, **dadurch gekennzeichnet, dass** die Füllstoffe ausgewählt sind aus faserförmigen und/oder teilchenförmigen Stoffen.

8. Füllstoffe gemäss einem der vorhergehenden Ansprüche, **dadurch gekennzeichnet, dass** die Füllstoffe ausgewählt sind aus der Gruppe bestehend aus Glasfasern, Kohlenstofffasern, Metallfasern, Borfasern, Aramidfasern, organischen Flammschutzmitteln, anorganischen Flammschutzmitteln und Synergisten, thermisch und/oder elektrisch leitfähigen Additiven, und mineralischen Füllstoffen, wobei Schichtsilikate ausgenommen sind.

9. Verwendung mindestens eines Füllstoffs zur Herstellung von gefüllten und/oder verstärkten thermoplastischen Kunststoff-Formmassen, wobei sich der Füllstoff von Schichtsilikat unterscheidet und eine Oberflächenbeschichtung aufweist, und wobei diese Oberflächenbeschichtung ein wasserlösliches Polyamid oder mehrere wasserlösliche Polyamide umfasst, **dadurch gekennzeichnet, dass** zumindest eines dieser wasserlösliche Polyamide durch Polykondensation aus folgenden Monomerkomponenten hergestellt ist:
(a) mindestens einer linear-aliphatischen, verzweigt-aliphatischen, cyclo-aliphatischen und/oder aromatischen Dicarbonsäure mit 6 bis 36 C-Atomen, bevorzugt mit 6 bis 18 C-Atomen, besonders bevorzugt mit 6 bis 12 C-Atomen; und
(b1) 25-100 Mol-% bezogen auf die Summe der Molmengen der Monomerkomponenten (b1)+(b2)+(b3) mindestens eines Diamins ausgewählt aus der Gruppe bestehend aus 4-Oxaheptan-1,7-diamin, 4,7-Dioxadecan-1,10-diamin, 4,7-Dioxa-5-methyl-decan-1,10-diamin, 6-oxa-undecan-1,11-diamin, 4,8-Dioxa-undecan-1,11-diamin, 4,8-Dioxa-5-methyl-undecan-1,11-diamin, 4,8-Dioxa-5,6-dimethyl-undecan-1,11-diamin, 4,9-Dioxa-dodecan-1,12-diamin, 4,7,10-Trioxa-tridecan-1,13-diamin, 4,7,10-Trioxa-5,8-dimethyl-tridecan-1,13-diamin, 4,11-Dioxatetradecan-1,14-diamin, 4,7,11-Trioxa-tetradecan-1,14-diamin, 4,7,10,13-Tetraoxa-hexadecan-1,16-diamin, 4,7,10,13,16-Pentaoxanonadecan-1,19-diamin und 4,17-Dioxa-eicosane-1,20-diamin; und
(b2) 0-50 Mol-% bezogen auf die Summe der Molmengen der Monomerkomponenten (b1)+(b2)+(b3) mindestens eines linear-aliphatischen, verzweigt-aliphatischen, cyclo-aliphatischen und/oder aromatischen Diamins mit 2 bis 36, bevorzugt 4 bis 18, besonders bevorzugt 6 bis 15 C-Atomen; und
(b3) 0-50 Mol-% bezogen auf die Summe der Molmengen der Monomerkomponenten (b1)+(b2)+(b3) mindestens einer Verbindung aus der Gruppe bestehend aus Oligooxyethylendiaminen, Polyoxyalkylendiaminen und Polyalkylenglykolen; und
(c) 0-45 Mol-% mindestens eines Lactams und/oder mindestens einer Aminocarbonsäure;
wobei die Molmenge der Monomerkomponente (a) im Verhältnis zur Summe der Molmengen der Monomerkomponenten (b1)+(b2)+(b3) ein Molverhältnis im Bereich von 0.8 bis 1.2 aufweist, und
wobei sich der Anteil der Monomerkomponente (c) auf die molare Summe von allen das zumindest eine wasserlösliche Polyamid bildenden Monomerkomponenten (a)+(b1)+(b2)+(b3)+(c) bezieht.

10. Verwendung gemäss Anspruch 9, **dadurch gekennzeichnet, dass** die Oberflächenbeschichtung aus einer wässrigen Lösung, die mindestens ein wasserlösliches Polyamid gemäss Anspruch 9 umfasst, auf die Füllstoffe aufgebracht wird.

11. Verwendung gemäss Anspruch 9 oder 10, **dadurch gekennzeichnet, dass** der mindestens eine oberflächenbeschichtete Füllstoff zur Herstellung von gefüllten oder verstärkten thermoplastischen Kunststoff-Formmassen verwendet wird, bei welcher Herstellung der oberflächenbeschichtete Füllstoff in mindestens ein Polymer eingearbeitet wird, welches ausgewählt ist aus der Gruppe bestehend aus Polyamiden, Polycarbonaten, Polystyrol, Polyacrylaten, insbesondere Polymethacrylat und Polymethylmethacrylat, Acrylnitril-Butadien-Styrol-Copolymerisat, Acrylnitril-Styrol-Copolymer, funktionalisierten Polyolefinen, Polyoxymethylen, Polyestern, insbesondere Polyethylenterephthalat und Polybutylenterephthalat, Polysulfonen, insbesondere des Typs PSU, PESU und PPSU, Polyphenylenether, Polyphenylensulfid, Polyphenylenoxid, flüssigkristallinen Polymeren, Polyetherketon, Polyetheretherketon, Polyimid, Polyamidimid, Polyesterimid, Polyesteramid, Polyurethanen, insbesondere des Typs TPU, Polysiloxan, sowie Mischungen oder Copolymeren auf Basis dieser Polymere.

12. Verwendung gemäss Anspruch 11, **dadurch gekennzeichnet, dass** das mindestens eine Polymer, in welches der mindestens eine oberflächenbeschichtete Füllstoff eingearbeitet wird, ein Polyamid umfasst.

13. Thermoplastische Kunststoff-Formmasse, die mindestens einen sich von Schichtsilikaten unterscheidenden Füllstoff enthält, der eine Oberflächenbeschichtung aufweist, wobei diese Oberflächenbeschichtung ein wasserlösliches Polyamid oder mehrere wasserlösliche Polyamide umfasst, **dadurch gekennzeichnet, dass** zumindest eines dieser wasserlöslichen Polyamide durch Polykondensation aus folgenden Monomerkomponenten hergestellt ist:
(a) mindestens einer linear-aliphatischen, verzweigt-aliphatischen, cyclo-aliphatischen und/oder aromatischen Dicarbonsäure mit 6 bis 36 C-Atomen, bevorzugt mit 6 bis 18 C-Atomen, besonders bevorzugt mit 6 bis 12 C-Atomen; und
(b1) 25-100 Mol-% bezogen auf die Summe der Molmengen der Monomerkomponenten (b1)+(b2)+(b3) mindestens eines Diamins ausgewählt aus der Gruppe bestehend aus 4-Oxaheptan-1,7-diamin, 4,7-Dioxadecan-1,10-diamin, 4,7-Dioxa-5-methyl-decan-1,10-diamin, 6-oxa-undecan-1,11-diamin, 4,8-Dioxa-undecan-1,11-diamin, 4,8-Dioxa-5-methyl-undecan-1,11-diamin, 4,8-Dioxa-5,6-dimethyl-undecan-1,11-diamin, 4,9-Dioxa-dodecan-1,12-diamin, 4,7,10-Trioxa-tridecan-1,13-diamin, 4,7,10-Trioxa-5,8-dimethyl-tridecan-1,13-diamin, 4,11-Dioxatetradecan-1,14-diamin, 4,7,11-Trioxa-tetradecan-1,14-diamin, 4,7,10,13-Tetraoxa-hexadecan-1,16-diamin, 4,7,10,13,16-Pentaoxa-nonadecan-1,19-diamin und 4,17-Dioxa-eicosane-1,20-diamin; und
(b2) 0-50 Mol-% bezogen auf die Summe der Molmengen der Monomerkomponenten (b1)+(b2)+(b3) mindestens eines linear-aliphatischen, verzweigt-aliphatischen, cyclo-aliphatischen und/oder aromatischen Diamins mit 2 bis 36, bevorzugt 4 bis 18, besonders bevorzugt 6 bis 15 C-Atomen; und
(b3) 0-50 Mol-% bezogen auf die Summe der Molmengen der Monomerkomponenten (b1)+(b2)+(b3) mindestens einer Verbindung aus der Gruppe bestehend aus Oligooxyethylendiaminen, Polyoxyalkylendiaminen und Polyalkylenglykolen; und
(c) 0-45 Mol-% mindestens eines Lactams und/oder mindestens einer Aminocarbonsäure;
wobei die Molmenge der Monomerkomponente (a) im Verhältnis zur Summe der Molmengen der Monomerkomponenten (b1)+(b2)+(b3) ein Molverhältnis im Bereich von 0.8 bis 1.2 aufweist, und
wobei sich der Anteil der Monomerkomponente (c) auf die molare Summe von allen das zumindest eine wasserlösliche Polyamid bildenden Monomerkomponenten (a)+(b1)+(b2)+(b3)+(c) bezieht.

14. Thermoplastische Kunststoff-Formmasse gemäss Anspruch 13, **dadurch gekennzeichnet, dass** die Kunststoff-Formmasse mindestens ein Polymer enthält das ausgewählt ist aus der Gruppe bestehend aus Polyamiden, Polycarbonaten, Polystyrol, Polyacrylaten, insbesondere Polymethacrylat und Polymethylmethacrylat, Acrylnitril-Butadien-Styrol-Copolymerisat, Acrylnitril-Styrol-Copolymer, funktionalisierten Polyolefinen, Polyoxymethylen, Polyestern, insbesondere Polyethylenterephthalat und Polybutylenterephthalat, Polysulfonen, insbesondere des Typs PSU, PESU und PPSU, Polyphenylenether, Polyphenylensulfid, Polyphenylenoxid, flüssigkristallinen Polymeren, Polyetherketon, Polyetheretherketon, Polyimid, Polyamidimid, Polyesterimid, Polyesteramid, Polyurethanen, insbesondere des Typs TPU, Polysiloxan, sowie Mischungen oder Copolymeren auf Basis dieser Polymere.

15. Thermoplastische Kunststoff-Formmasse gemäss Anspruch 14, **dadurch gekennzeichnet, dass** das mindestens eine Polymer der Kunststoff-Formmasse ein Polyamid umfasst, sodass es sich um eine Polyamid-Formmasse handelt.

16. Polyamid-Formmasse gemäss Anspruch 15, **dadurch gekennzeichnet, dass** diese Polyamid-Formmasse faserförmige Füllstoffe mit einer Oberflächenbeschichtung gemäss Anspruch 13 und/oder teilchenförmige Füllstoffe mit einer Oberflächenbeschichtung gemäss Anspruch 13 enthält.

## Claims

1. Fillers, with the exception of layered silicates, which have a surface coating, wherein this surface coating comprises a water-soluble polyamide or a plurality of water-soluble polyamides, **characterized in that** at least one of these water-soluble polyamides is produced by polycondensation from the following monomer components:
(a) at least one linear-aliphatic, branched-aliphatic, cycloaliphatic, and/or aromatic dicarboxylic acid having 6 to 36 C atoms, preferably having 6 to 18 C atoms, particularly preferably having 6 to 12 C atoms; and
(b1) 25-100 mol.% in relation to the total of the molar quantities of the monomer components (b1)+(b2)+(b3) of at least one diamine selected from the group consisting of 4-oxaheptane-1,7-diamine, 4,7-dioxadecane-1,10-diamine, 4,7-dioxa-5-methyl-decane-1,10-diamine, 6-oxa-undecane-1,11-diamine, 4,8-dioxa-undecane-1,11-diamine, 4,8-dioxa-5-methyl-undecane-1,11-diamine, 4,8-dioxa-5,6-dimethylundecane-1,11-diamine, 4,9-dioxa-dodecane-1,12-diamine, 4,7,10-trioxa-tridecane-1,13-diamine, 4,7,10-trioxa-5,8-dimethyl-tridecane-1,13-diamine, 4,11-dioxa-tetradecane-1,14-diamine, 4,7,11-trioxa-tetradecane-1,14-diamine, 4,7,10,13-tetraoxa-hexadecane-1,16-diamine, 4,7,10,13,16-pentaoxa-nonadecane-1,19-diamine and 4,17-dioxa-eicosane-1,20-diamine; and
(b2) 0-50 mol.% in relation to the total of the molar quantities of the monomer components (b1)+(b2)+(b3) of at least one linear-aliphatic, branched-aliphatic, cycloaliphatic, and/or aromatic diamine having 2 to 36, preferably 4 to 18, particularly preferably 6 to 15 C atoms; and
(b3) 0-50 mol.% in relation to the total of the molar quantities of the monomer components (b1)+(b2)+(b3) of at least one compound from the group consisting of oligooxyethylene diamines, polyoxyalkylene diamines, and polyalkylene glycols; and
(c) 0-45 mol.% of at least one lactam and/or at least one amino carboxylic acid;
wherein the molar quantity of the monomer component (a) in relation to the total of the molar quantities of the monomer components (b1)+(b2)+(b3) has a molar ratio in the range of 0.8 to 1.2, and
wherein the fraction of the monomer component (c) relates to the molar total of all monomer components (a)+(b1)+(b2)+(b3)+(c) forming the at least one water-soluble polyamide.

2. The fillers according to claim 1, **characterized in that** for at least one of the water-soluble polyamides of the surface coating, adipic acid and/or sebacic acid are selected as monomer component (a), 4,7,10-trioxa-tridecane-1,13-diamine and/or 4,7,10,13-tetraoxa-hexadecane-1,16-diamine are selected as monomer component (b1) and optionally hexane diamine is selected as monomer component (b2).

3. The fillers according to any one of the preceding claims, **characterized in that** the surface coating consists of at least 50 wt.%, preferably at least 70 wt.%, particularly preferably at least 90 wt.%, and very particularly preferably exclusively of at least one water-soluble polyamide according to claim 1 or 2.

4. The fillers according to any one of the preceding claims, **characterized in that** the surface coating comprises, in addition to the at least one water-soluble polyamide, at least one adhesion promoter, wherein the at least one adhesion promoter preferably makes up 10 to 50 wt. % of the surface coating, in relation to the total mass of the surface coating calculated as the dry mass.

5. The fillers according to any one of claims 1 to 3, **characterized in that** the surface coating does not contain a surfactant and does not contain an adhesion promoter.

6. The fillers according to any one of the preceding claims, **characterized in that** the fillers are selected from inorganic and/or organic materials.

7. The fillers according to any one of the preceding claims, **characterized in that** the fillers are selected from fibrous and/or particulate materials.

8. The fillers according to any one of the preceding claims, **characterized in that** the fillers are selected from the group consisting of glass fibres, carbon fibres, metal fibres, boron fibres, aramid fibres, organic flame retardants, inorganic flame retardants, and synergists, thermally and/or electrically conductive additives, and mineral fillers, wherein layered silicates are excluded.

9. A use of at least one filler for producing filled and/or reinforced thermoplastic plastics moulding materials, wherein the filler differs from layered silicates and has a surface coating, and wherein this surface coating comprises a water-soluble polyamide or a plurality of water-soluble polyamides, **characterized in that** at least one of these water-soluble polyamides is produced by polycondensation from the following monomer components:
(a) at least one linear-aliphatic, branched-aliphatic, cycloaliphatic, and/or aromatic dicarboxylic acid having 6 to 36 C atoms, preferably having 6 to 18 C atoms, particularly preferably having 6 to 12 C atoms; and
(b1) 25-100 mol.% in relation to the total of the molar quantities of the monomer components (b1)+(b2)+(b3) of at least one diamine selected from the group consisting of 4-oxaheptane-1,7-diamine, 4,7-dioxadecane-1,10-diamine, 4,7-dioxa-5-methyl-decane-1,10-diamine, 6-oxa-undecane-1,11-diamine, 4,8-dioxa-undecane-1,11-diamine, 4,8-dioxa-5-methyl-undecane-1,11-diamine, 4,8-dioxa-5,6-dimethylundecane-1,11-diamine, 4,9-dioxa-dodecane-1,12-diamine, 4,7,10-trioxa-tridecane-1,13-diamine, 4,7,10-trioxa-5,8-dimethyl-tridecane-1,13-diamine, 4,11-dioxa-tetradecane-1,14-diamine, 4,7,11-trioxa-tetradecane-1,14-diamine, 4,7,10,13-tetraoxa-hexadecane-1,16-diamine, 4,7,10,13,16-pentaoxa-nonadecane-1,19-diamine, and 4,17-dioxa-eicosane-1,20-diamine; and
(b2) 0-50 mol.% in relation to the total of the molar quantities of the monomer components (b1)+(b2)+(b3) of at least one linear-aliphatic, branched-aliphatic, cycloaliphatic and/or aromatic diamine having 2 to 36, preferably 4 to 18, particularly preferably 6 to 15 C atoms; and
(b3) 0-50 mol.% in relation to the total of the molar quantities of the monomer components (b1)+(b2)+(b3) of at least one compound from the group consisting of oligooxyethylene diamines, polyoxyalkylene diamines, and polyalkylene glycols; and
(c) 0-45 mol.% of at least one lactam and/or at least one amino carboxylic acid;
wherein the molar quantity of the monomer component (a) in relation to the total of the molar quantities of the monomer components (b1)+(b2)+(b3) has a molar ratio in the range of 0.8 to 1.2, and
wherein the fraction of the monomer component (c) relates to the molar total of all monomer components (a)+(b1)+(b2)+(b3)+(c) forming the at least one water-soluble polyamide.

10. The use according to claim 9, **characterized in that** the surface coating is applied to the fillers from an aqueous solution, which comprises at least one water-soluble polyamide according to claim 9.

11. The use according to claim 9 or 10, **characterized in that** the at least one surface-coated filler is used for producing filled or reinforced thermoplastic plastics moulding materials, during the production of which the surface-coated filler is incorporated into at least one polymer, which is selected from the group consisting of polyamides, polycarbonates, polystyrene, polyacrylates, in particular polymethacrylate and polymethyl methacrylate, acrylonitrile-butadiene-styrene copolymer, acrylonitrile-styrene copolymer, functionalized polyolefins, polyoxymethylene, polyesters, in particular polyethylene terephthalate and polybutylene terephthalate, polysulfones, in particular of the type PSU, PESU, and PPSU, polyphenylene ether, polyphenylene sulfide, polyphenylene oxide, liquid crystal polymers, polyether ketone, polyether ether ketone, polyimide, polyamide imide, polyester imide, polyester amide, polyurethanes, in particular of the type TPU, polysiloxane, and mixtures or copolymers based on these polymers.

12. The use according to claim 11, **characterized in that** the at least one polymer, into which the at least one surface-coated filler is incorporated, comprises a polyamide.

13. A thermoplastic plastics moulding material, which contains at least one filler different from layered silicates, which has a surface coating which comprises a water-soluble polyamide or a plurality of water-soluble polyamides, **characterized in that** at least one of these water-soluble polyamides is produced by polycondensation from the following monomer components:
(a) at least one linear-aliphatic, branched-aliphatic, cycloaliphatic, and/or aromatic dicarboxylic acid having 6 to 36 C atoms, preferably having 6 to 18 C atoms, particularly preferably having 6 to 12 C atoms; and
(b1) 25-100 mol.% in relation to the total of the molar quantities of the monomer components (b1)+(b2)+(b3) of at least one diamine selected from the group consisting of 4-oxaheptane-1,7-diamine, 4,7-dioxadecane-1,10-diamine, 4,7-dioxa-5-methyl-decane-1,10-diamine, 6-oxa-undecane-1,11-diamine, 4,8-dioxa-undecane-1,11-diamine, 4,8-dioxa-5-methyl-undecane-1,11-diamine, 4,8-dioxa-5,6-dimethylundecane-1,11-diamine, 4,9-dioxa-dodecane-1,12-diamine, 4,7,10-trioxa-tridecane-1,13-diamine, 4,7,10-trioxa-5,8-dimethyl-tridecane-1,13-diamine, 4,11-dioxa-tetradecane-1,14-diamine, 4,7,11-trioxa-tetradecane-1,14-diamine, 4,7,10,13-tetraoxa-hexadecane-1,16-diamine, 4,7,10,13,16-pentaoxa-nonadecane-1,19-diamine, and 4,17-dioxa-eicosane-1,20-diamine; and
(b2) 0-50 mol.% in relation to the total of the molar quantities of the monomer components (b1)+(b2)+(b3) of at least one linear-aliphatic, branched-aliphatic, cycloaliphatic, and/or aromatic diamine having 2 to 36, preferably 4 to 18, particularly preferably 6 to 15 C atoms; and
(b3) 0-50 mol.% in relation to the total of the molar quantities of the monomer components (b1)+(b2)+(b3) of at least one compound from the group consisting of oligooxyethylene diamines, polyoxyalkylene diamines, and polyalkylene glycols; and
(c) 0-45 mol.% of at least one lactam and/or at least one amino carboxylic acid;
wherein the molar quantity of the monomer component (a) in relation to the total of the molar quantities of the monomer components (b1)+(b2)+(b3) has a molar ratio in the range of 0.8 to 1.2, and
wherein the fraction of the monomer component (c) relates to the molar total of all monomer components (a)+(b1)+(b2)+(b3)+(c) forming the at least one water-soluble polyamide.

14. The thermoplastic plastics moulding material according to claim 13, **characterized in that** the plastics moulding material contains at least one polymer, which is selected from the group consisting of polyamides, polycarbonates, polystyrene, polyacrylates, in particular polymethacrylate and polymethyl methacrylate, acrylonitrile-butadiene-styrene copolymer, acrylonitrile-styrene copolymer, functionalized polyolefins, polyoxymethylene, polyesters, in particular polyethylene terephthalate and polybutylene terephthalate, polysulfones, in particular of the type PSU, PESU, and PPSU, polyphenylene ether, polyphenylene sulfide, polyphenylene oxide, liquid crystal polymers, polyether ketone, polyether ether ketone, polyimide, polyamide imide, polyester imide, polyester amide, polyurethanes, in particular of the type TPU, polysiloxane, and mixtures or copolymers based on these polymers.

15. The thermoplastic plastics moulding material according to claim 14, **characterized in that** the at least one polymer of the plastics moulding material comprises a polyamide, so that it is a polyamide moulding material.

16. The polyamide moulding material according to claim 15, **characterized in that** this polyamide moulding material contains fibrous fillers having a surface coating according to claim 13 and/or particulate fillers having a surface coating according to claim 13.

## Revendications

1. Matières de remplissage, à l'exception des silicates lamellaires, pourvues d'un revêtement de surface, ce revêtement de surface comprenant un polyamide hydrosoluble ou plusieurs polyamides hydrosolubles, **caractérisées en ce qu'**au moins un de ces polyamides hydrosolubles est produit par polycondensation à partir des composants monomères suivants :
(a) au moins un acide dicarboxylique aliphatique linéaire, aliphatique ramifié, cycloaliphatique et/ou aromatique avec 6 à 36 atomes C, de préférence avec 6 à 18 atomes C, de façon particulièrement préférée avec 6 à 12 atomes C ; et
(b1) 25 à 100 % en mole par rapport à la somme des quantités molaires des composants monomères (b1) + (b2) + (b3) d'au moins une diamine choisie à partir du groupe constitué de 4-oxaheptane-1,7-diamine, 4,7-dioxadécane-1,10-diamine, 4,7-dioxa-5-méthyl-décane-1,10-diamine, 6-oxa-undécane-1,11-diamine, 4,8-dioxa-undécane-1,11-diamine, 4,8-dioxa-5-méthyl-undécane-1,11-diamine, 4,8-dioxa-5,6-diméthyl-undécane-1,11-diamine, 4,9-dioxa-dodécane-1,12-diamine, 4,7,10-trioxa-tridécane-1,13-diamine, 4,7,10-trioxa-5,8-diméthyl-tridécane-1,13-diamine, 4,11-dioxatétradécane-1,14-diamine, 4,7,11-trioxa-tétradécane-1,14-diamine, 4,7,10,13-tétraoxa-hexadécane-1,16-diamine, 4,7,10,13,16-pentaoxanonadécane-1,19-diamine et 4,17-dioxa-eicosane-1,20-diamine ; et
(b2) 0 à 50 % en mole par rapport à la somme des quantités molaires des composants monomères (b1) + (b2) + (b3) d'au moins une diamine aliphatique linéaire, aliphatique ramifiée, cycloaliphatique et/ou aromatique avec 2 à 36, de préférence 4 à 18, de façon particulièrement préférée 6 à 15 atomes C ; et
(b3) 0 à 50 % en mole par rapport à la somme des quantités molaires des composants monomères (b1) + (b2) + (b3) d'au moins un composé du groupe constitué d'oligooxyéthylènediamines, polyoxyalkylènediamines et polyalkylèneglycoles ; et
(c) 0 à 45 % en mole d'au moins un lactame et/ou d'au moins un acide aminocarboxylique ;
la quantité molaire des composants monomères (a) par rapport à la somme des quantités molaires des composants monomères (b1) + (b2) + (b3) présentant un rapport molaire dans l'étendue de 0,8 à 1,2, et la part des composants monomères (c) se rapportant à la somme molaire de tous les composants monomères formant le polyamide hydrosoluble (a) + (b1) + (b2) + (b3) + (c).

2. Matières de remplissage selon la revendication 1, **caractérisées en ce que** pour au moins un des polyamides hydrosolubles du revêtement de surface, il est choisi comme composants monomères (a) l'acide adipique et/ou l'acide sébacique, comme composants monomères (b1) la 4,7,10-trioxa-tridécane-1,13-diamine et/ou la 4,7,10,13-tétraoxa-hexadécane-1,16-diamine, et le cas échéant comme composant monomère (b2) l'hexandiamine.

3. Matières de remplissage selon l'une des revendications précédentes, **caractérisées en ce que** le revêtement de surface est composé pour au moins 50 % en poids, de préférence pour au moins 70 % en poids, de façon particulièrement préférée pour au moins 90 % en poids, et de façon davantage préférée entre toutes exclusivement d'au moins un polyamide hydrosoluble selon la revendication 1 ou 2.

4. Matières de remplissage selon l'une des revendications précédentes, **caractérisées en ce que** le revêtement de surface, en plus du au moins un polyamide hydrosoluble, comprend au moins un agent d'adhérence, le au moins un agent d'adhérence représentant de façon préférée de 10 à 50 % en poids du revêtement de surface, par rapport à la masse totale calculée en tant que masse sèche du revêtement de surface.

5. Matières de remplissage selon l'une des revendications 1 à 3, **caractérisées en ce que** le revêtement de surface ne contient aucun agent mouillant ni aucun agent d'adhérence.

6. Matières de remplissage selon l'une des revendications précédentes, **caractérisées en ce que** les matières de remplissage sont choisies à partir de substances inorganiques et/ou organiques.

7. Matières de remplissage selon l'une des revendications précédentes, **caractérisées en ce que** les matières de remplissage sont choisies à partir de substances fibreuses et/ou particulaires.

8. Matières de remplissage selon l'une des revendications précédentes, **caractérisées en ce que** les matières de remplissage sont choisies à partir du groupe composé de fibres de verre, fibres de carbone, fibres métalliques, fibres de bore, fibres d'aramide, retardateurs de flammes organiques, retardateurs de flammes inorganiques, et additifs synergistes, thermiquement et/ou électriquement conducteurs, et des matières de remplissage minérales, les silicates laminaires étant exclus.

9. Utilisation d'au moins une matière de remplissage pour fabriquer des matières à mouler plastiques thermoplastiques remplies et/ou renforcées, la matière de remplissage se distinguant du silicate laminaire et présentant un revêtement de surface, ce revêtement de surface comprenant un polyamide hydrosoluble ou plusieurs polyamides hydrosolubles, **caractérisée en ce qu'**au moins un de ces polyamides hydrosolubles est produit par polycondensation à partir des composants monomères suivants :
(a) au moins un acide dicarboxylique aliphatique linéaire, aliphatique ramifié, cycloaliphatique et/ou aromatique avec 6 à 36 atomes C, de préférence avec 6 à 18 atomes C, de façon particulièrement préférée avec 6 à 12 atomes C ; et
(b1) 25 à 100 % en mole par rapport à la somme des quantités molaires des composants monomères (b1) + (b2) + (b3) d'au moins une diamine choisie à partir du groupe constitué de 4-oxaheptane-1,7-diamine, 4,7-dioxadécane-1,10-diamine, 4,7-dioxa-5-méthyl-décane-1,10-diamine, 6-oxa-undécane-1,11-diamine, 4,8-dioxa-undécane-1,11-diamine, 4,8-dioxa-5-méthyl-undécane-1,11-diamine, 4,8-dioxa-5,6-diméthyl-undécane-1,11-diamine, 4,9-dioxa-dodécane-1,12-diamine, 4,7,10-trioxa-tridécane-1,13-diamine, 4,7,10-trioxa-5,8-diméthyl-tridécane-1,13-diamine, 4,11-dioxa-tétradécane-1,14-diamine, 4,7,11-trioxa-tétradécane-1,14-diamine, 4,7,10,13-tétraoxa-hexadécane-1,16-diamine, 4,7,10,13,16-pentaoxa-nonadécane-1,19-diamine et 4,17-dioxa-eicosane-1,20-diamine ; et
(b2) 0 à 50 % en mole par rapport à la somme des quantités molaires des composants monomères (b1) + (b2) + (b3) d'au moins une diamine aliphatique linéaire, aliphatique ramifiée, cycloaliphatique et/ou aromatique avec 2 à 36, de préférence 4 à 18, de façon particulièrement préférée 6 à 15 atomes C ; et
(b3) 0 à 50 % en mole par rapport à la somme des quantités molaires des composants monomères (b1) + (b2) + (b3) d'au moins un composé du groupe constitué d'oligooxyéthylènediamines, polyoxyalkylènediamines et polyalkylèneglycoles ; et
(c) 0 à 45 % en mole d'au moins un lactame et/ou d'au moins un acide aminocarboxylique ;
la quantité molaire des composants monomères (a) par rapport à la somme des quantités molaires des composants monomères (b1) + (b2) + (b3) présentant un rapport molaire dans l'étendue de 0,8 à 1,2, et
la part des composants monomères (c) se rapportant à la somme molaire de tous les composants monomères formant le polyamide hydrosoluble (a) + (b1) + (b2) + (b3) + (c).

10. Utilisation selon la revendication 9, **caractérisée en ce que** le revêtement de surface est appliqué sur les matières de remplissage d'une solution aqueuse, qui comprend au moins un polyamide hydrosoluble selon la revendication 9.

11. Utilisation selon la revendication 9 ou 10, **caractérisée en ce que** la au moins une matière de remplissage revêtue en surface est utilisée pour produire des matières à mouler plastiques thermoplastiques remplies ou renforcées, au cours de cette production, la matière de remplissage revêtue en surface étant incorporée à au moins un polymère choisi à partir du groupe composé des polyamides, polycarbonates, polystyrène, polyacrylates, en particulier polyméthacrylate et polyméthylméthacrylate, copolymère acrylonitrile-butadiène-styrène, copolymère acrylonitrile-styrène, polyoléfines fonctionnelles, polyoxyméthylènes, polyesters, en particulier polyéthylène téréphtalate et polybutylène téréphtalate, polysulfones, en particulier du type PSU, PESU et PPSU, polyphénylène éther, sulfure de polyphénylène, oxyde de polyphénylène, polymères de cristaux liquides, polyéthercétone, polyétheréthercétone, polyimide, polyamideimide, polyesterimide, polyesteramide, polyuréthanes, en particulier du type TPU, polysiloxane, ainsi que des mélanges ou des copolymères sur la base de ces polymères.

12. Utilisation selon la revendication 11, **caractérisée en ce que** le au moins un polymère, dans lequel est incorporée la au moins une matière de remplissage revêtue en surface, comprend un polyamide.

13. Matière à mouler plastique thermoplastique, comprenant au moins une matière de remplissage se distinguant des silicates lamellaires et présentant un revêtement de surface, ce revêtement de surface comprenant un polyamide hydrosoluble ou plusieurs polyamides hydrosolubles, **caractérisée en ce qu'**au moins un de ces polyamides hydrosolubles est produit par polycondensation à partir des composants monomères suivants :
(a) au moins un acide dicarboxylique aliphatique linéaire, aliphatique ramifié, cycloaliphatique et/ou aromatique avec 6 à 36 atomes C, de préférence avec 6 à 18 atomes C, de façon particulièrement préférée avec 6 à 12 atomes C ; et
(b1) 25 à 100 % en mole par rapport à la somme des quantités molaires des composants monomères (b1) + (b2) + (b3) d'au moins une diamine choisie à partir du groupe constitué de 4-oxaheptane-1,7-diamine, 4,7-dioxadécane-1,10-diamine, 4,7-dioxa-5-méthyl-décane-1,10-diamine, 6-oxa-undécane-1,11-diamine, 4,8-dioxa-undécane-1,11-diamine, 4,8-dioxa-5-méthyl-undécane-1,11-diamine, 4,8-dioxa-5,6-diméthyl-undécane-1,11-diamine, 4,9-dioxa-dodécane-1,12-diamine, 4,7,10-trioxa-tridécane-1,13-diamine, 4,7,10-trioxa-5,8-diméthyl-tridécane-1,13-diamine, 4,11-dioxa-tétradécane-1,14-diamine, 4,7,11-trioxa-tétradécane-1,14-diamine, 4,7,10,13-tétraoxa-hexadécane-1,16-diamine, 4,7,10,13,16-pentaoxa-nonadécane-1,19-diamine et 4,17-dioxa-eicosane-1,20-diamine ; et
(b2) 0 à 50 % en mole par rapport à la somme des quantités molaires des composants monomères (b1) + (b2) + (b3) d'au moins une diamine aliphatique linéaire, aliphatique ramifiée, cycloaliphatique et/ou aromatique avec 2 à 36, de préférence 4 à 18, de façon particulièrement préférée 6 à 15 atomes C ; et
(b3) 0 à 50 % en mole par rapport à la somme des quantités molaires des composants monomères (b1) + (b2) + (b3) d'au moins un composé du groupe constitué d'oligooxyéthylènediamines, polyoxyalkylènediamines et polyalkylèneglycoles ; et
(c) 0 à 45 % en mole d'au moins un lactame et/ou d'au moins un acide aminocarboxylique ;
la quantité molaire des composants monomères (a) par rapport à la somme des quantités molaires des composants monomères (b1) + (b2) + (b3) présentant un rapport molaire dans l'étendue de 0,8 à 1,2, et
la part des composants monomères (c) se rapportant à la somme molaire de tous les composants monomères formant le polyamide hydrosoluble (a) + (b1) + (b2) + (b3) + (c).

14. Matière à mouler plastique thermoplastique selon la revendication 13, **caractérisée en ce que** la matière à mouler plastique comprend au moins un polymère choisi à partir du groupe composé des polyamides, polycarbonates, polystyrène, polyacrylates, en particulier polyméthacrylate et polyméthylméthacrylate, copolymère acrylonitrile-butadiène-styrène, copolymère acrylonitrile-styrène, polyoléfines fonctionnelles, polyoxyméthylènes, polyesters, en particulier polyéthylène téréphtalate et polybutylène téréphtalate, polysulfones, en particulier du type PSU, PESU et PPSU, polyphénylène éther, sulfure de polyphénylène, oxyde de polyphénylène, polymères de cristaux liquides, polyéthercétone, polyétheréthercétone, polyimide, polyamideimide, polyesterimide, polyesteramide, polyuréthanes, en particulier du type TPU, polysiloxane, ainsi que des mélanges ou des copolymères sur la base de ces polymères.

15. Matière à mouler plastique thermoplastique selon la revendication 14, **caractérisée en ce que** le au moins un polymère de la matière à mouler plastique comprend un polyamide de sorte qu'il s'agit d'une matière à mouler polyamide.

16. Matière à mouler polyamide selon la revendication 15, **caractérisée en ce que** cette matière à mouler polyamide contient des matières de remplissage fibreuses avec un revêtement de surface selon la revendication 13 et/ou des matières de remplissage particulaires avec un revêtement de surface selon la revendication 13.
